# EUROPEAN PATENT SPECIFICATION

(11) **EP 3 691 316 B1**
(45) Date of publication and mention of the grant of the patent: **16.02.2022**
(21) Application number: 18862806.9
(22) Date of filing: 28.09.2018
(51) Int. Cl.: H04W 12/00, H04W 12/04, H04W 12/037, H04W 12/041

(54) **PARAMETER PROTECTION METHOD, DEVICE AND SYSTEM**
PARAMETERSCHUTZVERFAHREN, VORRICHTUNG UND SYSTEM
PROCÉDÉ, DISPOSITIF ET SYSTÈME DE PROTECTION DE PARAMÈTRE

(30) Priority: 29.09.2017 CN 201710910650
(43) Date of publication of application: 05.08.2020
(73) Proprietor: Huawei Technologies Co., Ltd., Longgang District Shenzhen, Guangdong 518129 (CN)
(72) Inventor: YING, Jiangwei, Shenzhen Guangdong 518129 (CN); YANG, Yanmei, Shenzhen Guangdong 518129 (CN); LI, Meng, Shenzhen Guangdong 518129 (CN)
(74) Representative: Epping - Hermann - Fischer
(86) International application number: PCT/CN2018/108361
(87) International publication number: WO 2019/062862

(56) References cited:
- WO-A1-2016/166529
- CN-A- 1 773 903
- CN-A- 101 322 428
- CN-A- 103 702 327
- "3rd Generation Partnership Project; Technical Specification Group Services and System Aspects; Security Architecture and Procedures for 5G System (Release 15)", 3GPP DRAFT; S3I170316 33501 FOR LI DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 September 2017 (2017-09-27), XP051361258, Retrieved from the Internet: URL:http://www.3gpp.org/ftp/tsg_sa/WG3_Sec urity/TSGS3_LI/2017_66bis_Sophia/Docs/ [retrieved on 2017-09-27]
- "3rd Generation Partnership Project; Technical Specification Group Services and System Aspects; Study on the security aspects of the next generation system (Release 14)", 3GPP DRAFT; 33899-130, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2017 (2017-09-24), XP051360868, Retrieved from the Internet: URL:http://www.3gpp.org/ftp/tsg_sa/WG3_Sec urity/Docs/ [retrieved on 2017-09-24]

## Description

### TECHNICAL FIELD

This application relates to communications technologies, and in particular, to a parameter protection method and device, and a system.

### BACKGROUND

With continuous development of communications technologies, research and standardization for a 5th generation (5th-generation, 5G) mobile communications technology have been launched. In a 5G network, different entities are disposed, and the entities may perform different network functions. The 5G network includes a visited public land mobile network (visited public land mobile network, VPLMN) and a home public land mobile network (home public land mobile network, HPLMN). The VPLMN includes an access and mobility management function (access and mobility management function, AMF) entity, a session management function (session management function, SMF) entity, a policy control function (policy control function, PCF) entity, and the like. The HPLMN includes an authentication server function (authentication server function, AUSF) entity, a unified data management (unified data management, UDM) entity, an AMF entity, a PCF entity, and the like.

In the prior art, an entity in the HPLMN needs to send some configuration parameters to a terminal. During the sending of these configuration parameters, the entity in the HPLMN needs to send the configuration parameters to the terminal by using another entity in the VPLMN. For example, the UDM entity needs to send updated subscription data to the terminal by using the AMF entity in the VPLMN. For another example, the PCF entity in the HPLMN needs to send policy information to the terminal by using the PCF entity in the VPLMN and the AMF entity in the VPLMN in sequence.

It may be learned that in the prior art, a parameter sent by an entity in the HPLMN to the terminal can only be forwarded by using an entity in the VPLMN. However, during the forwarding process, the parameter may be intercepted or modified by the entity in the VPLMN. Consequently, security is relatively low.

3GPP TS 33.501 V0.3.0 discloses a security architecture and procedures for the 5G system.

### SUMMARY

This application provides parameter protection methods, devices, systems, and computer-readable storage mediums, to resolve a problem that a parameter sent by an entity in an HPLMN to a terminal may be intercepted or modified by an entity in a VPLMN

The foregoing object is achieved by the features of the independent claims. Additional features of the invention are presented in the dependent claims. In the following, parts of the description and drawings referring to embodiments, which are not covered by the claims are not presented as embodiments of the invention, but as examples useful for understanding the invention. According to a first aspect, this application provides a parameter protection method, including: obtaining, by an AUSF entity in an HPLMN, a security algorithm, and generating a key, where the key is used to protect transmission of a parameter between a terminal and the HPLMN; sending, by another entity in the HPLMN, the parameter to the AUSF entity, where the another entity is an entity that needs to send the parameter to the terminal; and performing, by the AUSF entity, security protection processing on the parameter based on the security algorithm and the key.

In the solution of this application, the AUSF entity in the HPLMN performs, based on the obtained security algorithm and the generated key, security protection processing on the parameter that needs to be sent to the terminal, and then the HPLMN protects the parameter that is to be sent to the terminal. Therefore, in a process in which the parameter is forwarded to the terminal by using an entity in a VPLMN, because security protection has been performed on the parameter, the parameter will not be intercepted or modified by the entity in the VPLMN, thereby improving security of the parameter sent by the HPLMN to the terminal during the transmission.

With reference to the first aspect, in a first implementation of the first aspect, the obtaining, by an AUSF entity in an HPLMN, a security algorithm includes: sending, by an AMF entity in a VPLMN, the security algorithm to the AUSF entity, where the security algorithm is a security algorithm negotiated by the terminal with the AMF entity in the VPLMN

With reference to the first aspect, in a second implementation of the first aspect, the obtaining, by an AUSF entity in an HPLMN, a security algorithm includes: sending, by an AMF entity in a VPLMN, a security algorithm supported by the terminal to the AUSF entity; and determining, by the AUSF entity based on the security algorithm supported by the terminal and a security algorithm supported by the HPLMN, the security algorithm used between the terminal and the HPLMN With reference to the first aspect, in a third implementation of the first aspect, the obtaining, by an AUSF entity in an HPLMN, a security algorithm includes: determining, by the AUSF entity, a default security algorithm between the terminal and the HPLMN as the security algorithm.

With reference to the first aspect, the first implementation of the first aspect, the second implementation of the first aspect, or the third implementation of the first aspect, in a fourth implementation of the first aspect, the generating, by an AUSF entity in an HPLMN, a key includes: sending, by the terminal, a random number to the AUSF entity, where the random number is a random number encrypted by using a public key of the HPLMN; decrypting, by the AUSF entity, the random number by using a private key that is of the HPLMN and that is corresponding to the public key; and generating, by the AUSF entity, the key based on an input parameter, where the input parameter includes a decrypted random number and a first root key, and the first root key is generated by an authentication credential repository and processing function ARPF entity in the HPLMN in a security authentication process between the terminal and the AMF entity in the

### VPLMN

With reference to the first aspect, the first implementation of the first aspect, the second implementation of the first aspect, or the third implementation of the first aspect, in a fifth implementation of the first aspect, the generating, by an AUSF entity in an HPLMN, a key includes: sending, by an ARPF entity in the HPLMN, a second root key to the AUSF entity, where the second root key is generated by the ARPF entity, and the second root key is different from a first root key generated by the ARPF entity in a security authentication process between the terminal and the AMF entity in the VPLMN; and generating, by the AUSF entity, the key based on an input parameter, where the input parameter includes the second root key.

With reference to the first aspect, the first implementation of the first aspect, the second implementation of the first aspect, or the third implementation of the first aspect, in a sixth implementation of the first aspect, the generating, by an AUSF entity in an HPLMN, a key includes: sending, by an ARPF entity in the HPLMN, a third root key to the AUSF entity, where the third root key is generated by the ARPF entity in a security authentication process between the terminal and an AMF entity in the HPLMN; and generating, by the AUSF entity, the key based on an input parameter, where the input parameter includes the third root key.

With reference to the first aspect, the fourth implementation of the first aspect, the fifth implementation of the first aspect, or the sixth implementation of the first aspect, in a seventh implementation of the first aspect, the input parameter further includes one or both of the following: an identifier of the another entity and an identifier of the security algorithm.

With reference to any one of the first aspect or the foregoing implementations of the first aspect, in an eighth implementation of the first aspect, after the performing, by the AUSF entity, security protection processing on the parameter based on the security algorithm and the key, the method further includes: sending, by the AUSF entity to the terminal, a parameter obtained by the security protection processing.

With reference to the first aspect or the eighth implementation of the first aspect, in a ninth implementation of the first aspect, the sending, by the AUSF entity to the terminal, a parameter obtained by the security protection processing includes: sending, by the AUSF entity to the terminal by using the another entity, the parameter obtained by the security protection processing; or sending, by the AUSF entity to the terminal by using the AMF entity in the VPLMN, the parameter obtained by the security protection processing.

According to a second aspect, a parameter protection method is provided. The method includes: obtaining, by an AUSF entity in an HPLMN, a security algorithm, and generating a key, where the key is used to protect transmission of a parameter between a terminal and the HPLMN; and sending, by the AUSF entity, the security algorithm and the key to another entity in the HPLMN, where the another entity is an entity that needs to send the parameter to the terminal.

In the solution of this application, after the another entity in the HPLMN receives the security algorithm and the key, the another entity may perform security protection processing on the parameter based on the security algorithm and the key, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission. With reference to the second aspect, in a first implementation of the second aspect, the obtaining, by an AUSF entity in an HPLMN, a security algorithm includes: sending, by an AMF entity in a VPLMN, the security algorithm to the AUSF entity, where the security algorithm is a security algorithm negotiated by the terminal with the AMF entity in the VPLMN

With reference to the second aspect, in a second implementation of the second aspect, the obtaining, by an AUSF entity in an HPLMN, a security algorithm includes: sending, by an AMF entity in a VPLMN, a security algorithm supported by the terminal to the AUSF entity; and determining, by the AUSF entity based on the security algorithm supported by the terminal and a security algorithm supported by the HPLMN, the security algorithm used between the terminal and the HPLMN With reference to the second aspect, in a third implementation of the second aspect, the obtaining, by an AUSF entity in an HPLMN, a security algorithm includes: determining, by the AUSF entity, a default security algorithm between the terminal and the HPLMN as the security algorithm. With reference to the second aspect, the first implementation of the second aspect, the second implementation of the second aspect, or the third implementation of the second aspect, in a fourth implementation of the second aspect, the generating, by an AUSF entity in an HPLMN, a key includes: sending, by the terminal, a random number to the AUSF entity, where the random number is a random number encrypted by using a public key of the HPLMN; decrypting, by the AUSF entity, the random number by using a private key that is of the HPLMN and that is corresponding to the public key; and generating, by the AUSF entity, the key based on an input parameter, where the input parameter includes a decrypted random number and a first root key, and the first root key is generated by an authentication credential repository and processing function ARPF entity in the HPLMN in a security authentication process between the terminal and the AMF entity in the VPLMN

With reference to the second aspect, the first implementation of the second aspect, the second implementation of the second aspect, or the third implementation of the second aspect, in a fifth implementation of the second aspect, the generating, by an AUSF entity in an HPLMN, a key includes: sending, by an ARPF entity in the HPLMN, a second root key to the AUSF entity, where the second root key is generated by the ARPF entity, and the second root key is different from a first root key generated by the ARPF entity in a security authentication process between the terminal and the AMF entity in the VPLMN; and generating, by the AUSF entity, the key based on an input parameter, where the input parameter includes the second root key.

With reference to the second aspect, the first implementation of the second aspect, the second implementation of the second aspect, or the third implementation of the second aspect, in a sixth implementation of the second aspect, the generating, by an AUSF entity in an HPLMN, a key includes: sending, by an ARPF entity in the HPLMN, a third root key to the AUSF entity, where the third root key is generated by the ARPF entity in a security authentication process between the terminal and an AMF entity in the HPLMN; and generating, by the AUSF entity, the key based on an input parameter, where the input parameter includes the third root key.

With reference to the second aspect, the fourth implementation of the second aspect, the fifth implementation of the second aspect, or the sixth implementation of the second aspect, in a seventh implementation of the second aspect, the input parameter further includes one or both of the following: an identifier of the another entity and an identifier of the security algorithm.

With reference to any one of the second aspect or the implementations of the second aspect, in an eighth implementation of the second aspect, after the sending, by the AUSF entity, the security algorithm and the key to another entity in the HPLMN, the method further includes: performing, by the another entity, security protection processing on the parameter based on the security algorithm and the key.

With reference to any one of the second aspect or the eighth implementation of the second aspect, in a ninth implementation of the second aspect, after the performing, by the another entity, security protection processing on the parameter based on the security algorithm and the key, the method further includes:
sending, by the another entity to the terminal, a parameter obtained by the security protection processing.

With reference to any one of the second aspect or the ninth implementation of the second aspect, in a tenth implementation of the second aspect, the performing, by the another entity, security protection processing on the parameter based on the security algorithm and the key includes: performing, by the another entity, encryption processing on the parameter based on the security algorithm and the key; or performing, by the another entity, integrity protection processing on the parameter based on the security algorithm and the key.

According to a third aspect, a parameter protection device is provided. The device includes: an obtaining unit, configured to obtain a security algorithm; a generation unit, configured to generate a key, where the key is used to protect transmission of a parameter between a terminal and an HPLMN; a receiving unit, configured to receive the parameter sent by another entity in the HPLMN, where the another entity is an entity that needs to send the parameter to the terminal; and a processing unit, configured to perform security protection processing on the parameter based on the security algorithm and the key.

With reference to the third aspect, in a first possible implementation of the third aspect, the obtaining unit is specifically configured to: receive the security algorithm sent by an AMF entity in a VPLMN, where the security algorithm is a security algorithm negotiated by the terminal with the AMF entity in the VPLMN

With reference to the third aspect, in a second possible implementation of the third aspect, the obtaining unit includes: a first receiving subunit, configured to receive a security algorithm that is supported by the terminal and that is sent by an AMF entity in a VPLMN; and a determining subunit, configured to determine, based on the security algorithm supported by the terminal and a security algorithm supported by the HPLMN, the security algorithm used between the terminal and the HPLMN.

With reference to the third aspect, in a third implementation of the third aspect, the obtaining unit is specifically configured to determine a default security algorithm between the terminal and the HPLMN as the security algorithm.

With reference to the third aspect, the first implementation of the third aspect, the second implementation of the third aspect, or the third implementation of the third aspect, in a fourth implementation of the third aspect, the generation unit includes: a second receiving subunit, configured to receive a random number sent by the terminal, where the random number is a random number encrypted by using a public key of the HPLMN; a decryption subunit, configured to decrypt the random number by using a private key that is of the HPLMN and that is corresponding to the public key; and a first generation subunit, configured to generate the key based on an input parameter, where the input parameter includes a decrypted random number and a first root key, and the first root key is generated by an authentication credential repository and processing function ARPF entity in the HPLMN in a security authentication process between the terminal and the AMF entity in the VPLMN

With reference to the third aspect, the first implementation of the third aspect, the second implementation of the third aspect, or the third implementation of the third aspect, in a fifth implementation of the third aspect, the generation unit includes: a third receiving subunit, configured to receive a second root key sent by an ARPF entity in the HPLMN, where the second root key is generated by the ARPF entity, and the second root key is different from a first root key generated by the ARPF entity in a security authentication process between the terminal and the AMF entity in the VPLMN; and a second generation subunit, configured to generate the key based on an input parameter, where the input parameter includes the second root key.

With reference to the third aspect, the first implementation of the third aspect, the second implementation of the third aspect, or the third implementation of the third aspect, in a sixth implementation of the third aspect, the generation unit includes: a fourth receiving subunit, configured to receive a third root key sent by an ARPF entity in the HPLMN, where the third root key is generated by the ARPF entity in a security authentication process between the terminal and an AMF entity in the HPLMN; and a third generation subunit, configured to generate the key based on an input parameter, where the input parameter includes the third root key.

With reference to the third aspect, the fourth implementation of the third aspect, the fifth implementation of the third aspect, or the sixth implementation of the third aspect, in a seventh implementation of the third aspect, the input parameter further includes one or both of the following: an identifier of the another entity and an identifier of the security algorithm.

With reference to any one of the third aspect or the foregoing implementations of the third aspect, in an eighth implementation of the third aspect, the device further includes: a sending unit, configured to: after the processing unit performs security protection processing on the parameter based on the security algorithm and the key, send, to the terminal, a parameter obtained by the security protection processing.

With reference to the third aspect or the eighth implementation of the third aspect, in a ninth implementation of the third aspect, the sending unit is specifically configured to: send, to the terminal by using the another entity, the parameter obtained by the security protection processing; or send, to the terminal by using the AMF entity in the VPLMN, the parameter obtained by the security protection processing.

According to a fourth aspect, a parameter protection device is provided. The device includes: an obtaining unit, configured to obtain a security algorithm; a generation unit, configured to generate a key, where the key is used to protect transmission of a parameter between a terminal and an HPLMN; and a sending unit, configured to send the security algorithm and the key to another entity in the HPLMN, where the another entity is an entity that needs to send the parameter to the terminal.

With reference to the fourth aspect, in a first possible implementation of the fourth aspect, the obtaining unit is specifically configured to: receive the security algorithm sent by an AMF entity in a VPLMN, where the security algorithm is a security algorithm negotiated by the terminal with the AMF entity in the VPLMN

With reference to the fourth aspect, in a second possible implementation of the fourth aspect, the obtaining unit includes: a first receiving subunit, configured to receive a security algorithm that is supported by the terminal and that is sent by an AMF entity in a VPLMN; and a determining subunit, configured to determine, based on the security algorithm supported by the terminal and a security algorithm supported by the HPLMN, the security algorithm used between the terminal and the HPLMN

With reference to the fourth aspect, in a third implementation of the fourth aspect, the obtaining unit is specifically configured to determine a default security algorithm between the terminal and the HPLMN as the security algorithm.

With reference to the fourth aspect, the first implementation of the fourth aspect, the second implementation of the fourth aspect, or the third implementation of the fourth aspect, in a fourth implementation of the fourth aspect, the generation unit includes: a second receiving subunit, configured to receive a random number sent by the terminal, where the random number is a random number encrypted by using a public key of the HPLMN; a decryption subunit, configured to decrypt the random number by using a private key that is of the HPLMN and that is corresponding to the public key; and a first generation subunit, configured to generate the key based on an input parameter, where the input parameter includes a decrypted random number and a first root key, and the first root key is generated by an authentication credential repository and processing function ARPF entity in the HPLMN in a security authentication process between the terminal and the AMF in the VPLMN

With reference to the fourth aspect, the first implementation of the fourth aspect, the second implementation of the fourth aspect, or the third implementation of the fourth aspect, in a fifth implementation of the fourth aspect, the generation unit includes: a third receiving subunit, configured to receive a second root key sent by an ARPF entity in the HPLMN, where the second root key is generated by the ARPF entity, and the second root key is different from a first root key generated by the ARPF entity in a security authentication process between the terminal and the AMF entity in the VPLMN; and a second generation subunit, configured to generate the key based on an input parameter, where the input parameter includes the second root key.

With reference to the fourth aspect, the first implementation of the fourth aspect, the second implementation of the fourth aspect, or the third implementation of the fourth aspect, in a sixth implementation of the fourth aspect, the generation unit includes: a fourth receiving subunit, configured to receive a third root key sent by an ARPF entity in the HPLMN, where the third root key is generated by the ARPF entity in a security authentication process between the terminal and an AMF entity in the HPLMN; and a third generation subunit, configured to generate the key based on an input parameter, where the input parameter includes the third root key.

With reference to the fourth aspect, the fourth implementation of the fourth aspect, the fifth implementation of the fourth aspect, or the sixth implementation of the fourth aspect, in a seventh implementation of the fourth aspect, the input parameter further includes one or both of the following: an identifier of the another entity and an identifier of the security algorithm. According to a fifth aspect, a parameter protection device is provided. The device includes: a receiving unit, configured to receive a security algorithm and a key that are sent by an AUSF entity in an HPLMN, where the key is used to protect transmission of a parameter between a terminal and the HPLMN

With reference to the fifth aspect, in a first implementation of the fifth aspect, the device further includes: a processing unit, configured to: after the receiving unit receives the security algorithm and the key that are sent by the AUSF entity in the HPLMN, perform security protection processing on the parameter based on the security algorithm and the key; a sending unit, configured to send, to the terminal, a parameter obtained by the security protection processing.

With reference to the fifth aspect or the first implementation of the fifth aspect, in a second implementation of the fifth aspect, the processing unit is specifically configured to: perform encryption processing on the parameter based on the security algorithm and the key; or perform integrity protection processing on the parameter based on the security algorithm and the key. According to a sixth aspect, a communications system is provided. The system includes the parameter protection device according to any one of the third aspect; or the possible implementations of the fourth aspect and the parameter protection device according to any one of the fifth aspect.

According to a seventh aspect, an AUSF entity is provided. The AUSF entity includes: a processor and a communications interface, configured to implement the method according to the first aspect. According to an eighth aspect, an AUSF entity is provided. The AUSF entity includes: a processor and a communications interface, configured to implement the method according to the second aspect.

According to a ninth aspect, another entity is provided. The another entity includes: a processor and a communications interface, configured to implement the method according to the second aspect.

According to a tenth aspect, a terminal is provided. The terminal includes: a processor, a receiver, and a transmitter, configured to implement the method according to the third aspect.

According to an eleventh aspect, an AUSF entity is provided. The AUSF entity includes a unit or means (means) configured to perform steps of any method according to the first aspect. According to a twelfth aspect, an AUSF entity is provided. The AUSF entity includes a processor and a memory. The memory is configured to store a program, and the processor invokes the program stored in the memory to perform any method according to the first aspect.

According to a thirteenth aspect, an AUSF entity is provided. The AUSF entity includes at least one processing element or chip configured to perform any method according to the first aspect. According to a fourteenth aspect, a program is provided. When the program is executed by a processor, the program is used to perform any method according to the first aspect.

According to a fifteenth aspect, a computer-readable storage medium is provided. The computer-readable storage medium includes the program in the fourteenth aspect.

According to a sixteenth aspect, an AUSF entity is provided. The AUSF entity includes a unit or means (means) configured to perform steps of any method according to the second aspect. According to a seventeenth aspect, an AUSF entity is provided. The AUSF entity includes a processor and a memory. The memory is configured to store a program, and the processor invokes the program stored in the memory to perform any method according to the second aspect. According to an eighteenth aspect, an AUSF entity is provided. The AUSF entity includes at least one processing element or chip configured to perform any method according to the second aspect. According to a nineteenth aspect, a program is provided. When the program is executed by a processor, the program is used to perform any method according to the second aspect. According to a twentieth aspect, a computer-readable storage medium is provided. The computer-readable storage medium includes the program in the nineteenth aspect.

According to a twenty-first aspect, another entity is provided. The another entity includes a unit or means (means) configured to perform steps of the method according to the second aspect.

According to a twenty-second aspect, another entity is provided. The another entity includes a processor and a memory. The memory is configured to store a program, and the processor invokes the program stored in the memory to perform the method according to the eighth implementation or the ninth implementation of the second aspect.

According to a twenty-third aspect, another entity is provided. The another entity includes at least one processing element or chip configured to perform the method according to the second aspect. According to a twenty-fourth aspect, a program is provided. When the program is executed by a processor, the program is used to perform the method according to the eighth implementation or the ninth implementation of the second aspect.

According to a twenty-fifth aspect, a computer-readable storage medium is provided. The computer-readable storage medium includes the program in the twenty-fourth aspect. According to a twenty-sixth aspect, a terminal is provided. The terminal includes a unit or means (means) configured to perform steps related to the method according to the first aspect or the second aspect.

According to a twenty-seventh aspect, a terminal is provided. The terminal includes a processor and a memory. The memory is configured to store a program, and the processor invokes the program stored in the memory to perform the method according to the eighth implementation or the ninth implementation of the first aspect, or the method according to the ninth implementation of the second aspect.

According to a twenty-eighth aspect, a terminal is provided. The terminal includes at least one processing element or chip configured to perform the method according to the first aspect or the second aspect.

According to a twenty-ninth aspect, a program is provided. When the program is executed by a processor, the program is used to perform the method according to the eighth implementation or the ninth implementation of the first aspect, or the method according to the ninth implementation of the second aspect.

According to a thirtieth aspect, a computer-readable storage medium is provided. The computer-readable storage medium includes the program in the twenty-ninth aspect.

### BRIEF DESCRIPTION OF DRAWINGS

FIG. 1 provides a network architecture;
FIG. 2 is a schematic architectural diagram 1 of network roaming in a network architecture;
FIG. 3 is a schematic architectural diagram 2 of network roaming in a network architecture;
FIG. 4 is a schematic communication diagram of a parameter protection method according to an embodiment of this application;
FIG. 5 is a schematic communication diagram of another parameter protection method according to an embodiment of this application;
FIG. 6 is a schematic communication diagram of still another parameter protection method according to an embodiment of this application;
FIG. 7 is a schematic communication diagram of yet another parameter protection method according to an embodiment of this application;
FIG. 8 is a schematic communication diagram of a terminal registration procedure according to an embodiment of this application;
FIG. 9 is a schematic communication diagram of still yet another parameter protection method according to an embodiment of this application;
FIG. 10 is a schematic communication diagram of a still yet further parameter protection method according to an embodiment of this application;
FIG. 11 is a schematic communication diagram of a further parameter protection method according to an embodiment of this application;
FIG. 12 is a schematic communication diagram of a still further parameter protection method according to an embodiment of this application;
FIG. 13 is a schematic communication diagram of a yet further parameter protection method according to an embodiment of this application;
FIG. 14 is a schematic communication diagram of a still yet further parameter protection method according to an embodiment of this application;
FIG. 15 is a schematic communication diagram of even still another parameter protection method according to an embodiment of this application;
FIG. 16 is a schematic communication diagram of an even still further parameter protection method according to an embodiment of this application;
FIG. 17 is a schematic communication diagram of even yet another parameter protection method according to an embodiment of this application;
FIG. 18 is a schematic communication diagram of an even yet further parameter protection method according to an embodiment of this application;
FIG. 19 is a schematic communication diagram of sending a third root key by an ARPF entity to an AUSF entity according to an embodiment of this application;
FIG. 20a is a schematic communication diagram 1 of still even another parameter protection method according to an embodiment of this application;
FIG. 20b is a schematic communication diagram 2 of still even another parameter protection method according to an embodiment of this application;
FIG. 21a is a schematic communication diagram 1 of a still even further parameter protection method according to an embodiment of this application;
FIG. 21b is a schematic communication diagram 2 of a still even further parameter protection method according to an embodiment of this application;
FIG. 22 is a schematic communication diagram of a terminal registration procedure according to an embodiment of this application;
FIG. 23a is a schematic communication diagram 1 of yet even another parameter protection method according to an embodiment of this application;
FIG. 23b is a schematic communication diagram 2 of yet even another parameter protection method according to an embodiment of this application;
FIG. 24a is a schematic communication diagram 1 of a yet even further parameter protection method according to an embodiment of this application;
FIG. 24b is a schematic communication diagram 2 of a yet even further parameter protection method according to an embodiment of this application;
FIG. 25a is a schematic communication diagram 1 of still yet even another parameter protection method according to an embodiment of this application;
FIG. 25b is a schematic communication diagram 2 of still yet even another parameter protection method according to an embodiment of this application;
FIG. 26a is a schematic communication diagram 1 of a still yet even further parameter protection method according to an embodiment of this application;
FIG. 26b is a schematic communication diagram 2 of a still yet even further parameter protection method according to an embodiment of this application;
FIG. 27a is a schematic block diagram of an AUSF entity according to an embodiment of this application;
FIG. 27b is a schematic block diagram of another AUSF entity according to an embodiment of this application;
FIG. 28a is a schematic block diagram of still another AUSF entity according to an embodiment of this application;
FIG. 28b is a schematic block diagram of yet another AUSF entity according to an embodiment of this application;
FIG. 29a is a schematic block diagram of another entity according to an embodiment of this application;
FIG. 29b is a schematic block diagram of still another entity according to an embodiment of this application;
FIG. 30a is a schematic block diagram of a terminal according to an embodiment of this application; and
FIG. 30b is a schematic block diagram of another terminal according to an embodiment of this application.

### DESCRIPTION OF EMBODIMENTS

Embodiments of this application are applied to a 5G communications system or another system that may emerge in the future. The following describes some terms used in this application, to facilitate understanding of a person skilled in the art. It should be noted that, when solutions in the embodiments of this application are applied to the 5G communications system or the another system that may emerge in the future, names of a network device and a terminal may change, but this does not affect implementation of the solutions in the embodiments of this application. It should be noted that the terms used in the embodiments of this application may be mutually referenced, and details are not described repeatedly.

The following describes the technical solutions in the embodiments of this application with reference to the accompanying drawings.

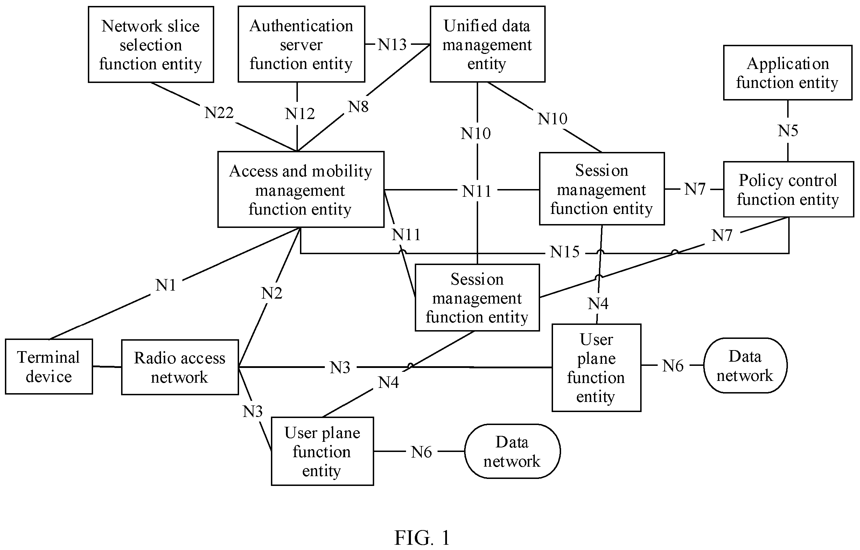

FIG. 1 provides a network architecture. The network architecture may be applied to a next-generation communications system. Concepts related to the network architecture and components in the network architecture are briefly described below as follows.

Mobile communications technologies are updated and upgraded, and research and standardization for 5G technologies have been launched. The 5G technologies may be applied to fields such as mobile broadband, multimedia, machine type communication (machine type communication, MTC), industrial control, and an intelligent transportation system (intelligent transportation system, ITS). To meet greatly changing service requirements, a 5G network needs to be flexibly constructed. A flexible 5G construction manner is to separate network functions. To be specific, a control plane (control plane, CP) function and a user plane (user plane, UP) function are separated, and a mobility management (mobility management, MM) function and a session management (session management, SM) function in the CP are separated. A network slicing (network slice) technology may be used to separate the network functions.

The network slicing technology may be used to divide a physical network into a plurality of virtual end-to-end virtual networks. Each divided virtual network, including a device, an access technology, a transmission path, a core network, and the like that are in the virtual network, is logically independent. Each network slice includes one instance of an independent network function or instances of a combination of network functions. Each network slice has a different function feature, and faces a different requirement and service. The network slices are separated from each other, so that different users or user groups may flexibly and dynamically customize a network capability based on different application scenarios and requirements.

A network slice includes a control plane function (control plane function, CPF) entity and a user plane function (user plane function, UPF) entity. The CPF entity includes an AMF entity and an SMF entity. The CPF entity mainly completes functions such as access authentication, security encryption, and location registration that are of a terminal, and completes functions such as establishment, release, and modification that are of a user plane transmission path. The UPF entity mainly completes functions such as routing and forwarding of user plane data.

A terminal may include various handheld devices, vehicle-mounted devices, wearable devices, or computing devices that have a wireless communication function, or another processing device connected to a wireless modem, and terminals in various forms such as mobile stations (mobile station, MS), terminals (terminal), user equipment (user equipment, UE), and software terminals, for example, a water meter, an electricity meter, and a sensor.

A radio access network (radio access network, RAN) is a network including a plurality of 5G-RAN nodes, and implements a radio physical layer function, resource scheduling and radio resource management, radio access control, and a mobility management function. For example, the 5G-RAN is connected to the UPF entity through a user plane interface N3, to transmit data of the terminal. The 5G-RAN establishes a control plane signaling connection to the AMF entity through a control plane interface N2, to implement functions such as radio access bearer control. An authentication credential repository and processing function (authentication credential repository and processing function, ARPF) entity is configured to generate a security vector used for authentication between UE and a network, and may be a part of a UDM entity.

An AUSF entity is a full-function node, and is configured to: receive an authentication vector request from the AMF entity, and return, to the AMF entity, a 5G authentication vector obtained from the ARPF entity or the UDM entity; or further process a 5G authentication vector obtained from the ARPF entity or the UDM entity, and then return a processed 5G authentication vector to the AMF entity, so that the 5G authentication vector is used for security authentication between the terminal and a network side.

An AMF entity is responsible for authentication of the terminal, mobility management of the terminal, network slice selection, selection of an SMF entity, and the like. In addition, the AMF entity may be used as an anchor point of a signaling connection between N1 and N2, to provide routing of an N1/N2 SM message for the SMF entity. In addition, the AMF entity may maintain and manage status information of the terminal.

An SMF entity is responsible for a session of the terminal, for example, a session management function such as establishment, release, and modification of a user plane transmission path, selection of a UPF entity, allocation of an internet protocol (internet protocol, IP) address, quality of service (quality of service, QoS) management of the session, and obtaining a policy control and charging (policy control and charging, PCC) policy from a PCF entity.

A NEF entity is responsible for connecting the SMF entity to an external DN, and may include a third-party authentication entity.

A UPF entity serves as an anchor point of a session connection of a PDU entity, and is responsible for data packet filtering, data transmission/forwarding, rate control, charging information generation, and the like of the terminal.

A UDM entity allocates reference information to a network entity, for example, allocates reference information to the SMF entity or the NEF entity.

A PCF entity allocates reference information to a network entity, for example, allocates reference information to the SMF entity or the NEF entity.

A network slice selection function (network slice selection function, NSSF) is used to select an appropriate network slice for UE.

A data network (data network, DN) provides an external data network service.

An application function (application function, AF) is used for interaction between an external application and a PCF entity in a core network, and is mainly used to perform policy and charging control on an IP-connectivity access network (IP-connectivity access network, IP-CAN) corresponding to the application.

For an identity (identity, ID), a VPLMN and an HPLMN may have their own IDs.

As shown in FIG. 1, the foregoing components perform communication through each interface in a next-generation network architecture. For example, the terminal may communicate with the AMF entity through an interface N1.

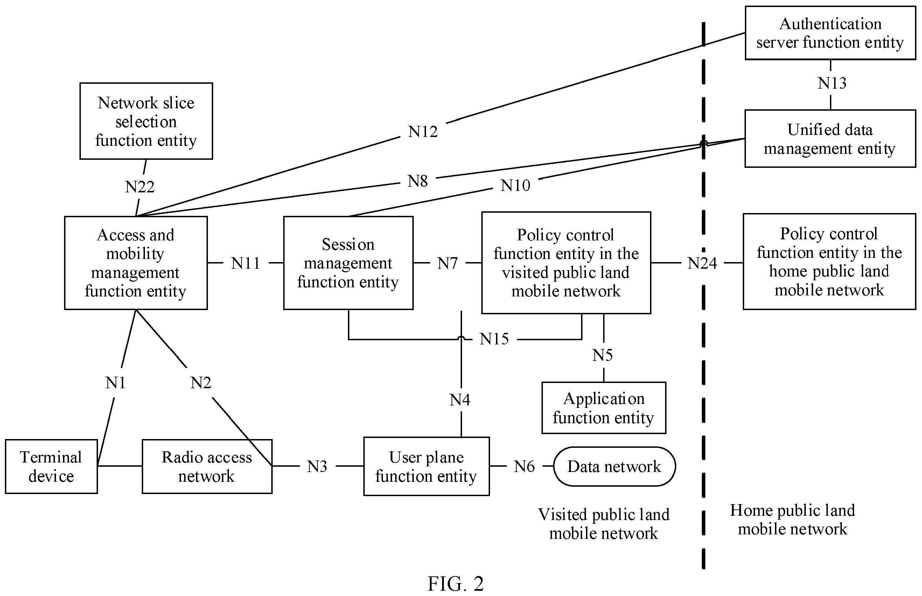

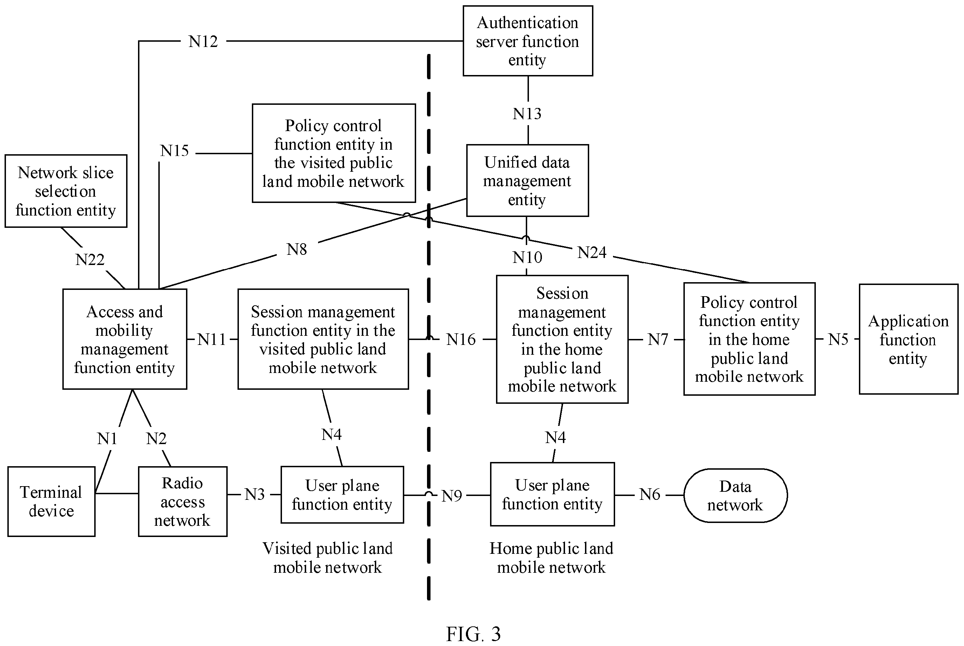

FIG. 2 is a schematic architectural diagram 1 of network roaming in a network architecture, and FIG. 3 is a schematic architectural diagram 2 of network roaming in a network architecture. As shown in FIG. 2 and FIG. 3, in a 5G network architecture in a roaming scenario, a network is divided into a VPLMN and an HPLMN. The VPLMN includes a RAN, a UPF entity, a DN, an NSSF entity, a V-AMF entity, a V-SMF entity, a V-PCF entity, a V-UPF entity, and the like. The V-AMF entity is an AMF entity belonging to the VPLMN, the V-SMF entity is an SMF entity belonging to the VPLMN, the V-PCF entity is a PCF entity belonging to the VPLMN, and the V-UPF entity is a UPF entity belonging to the VPLMN. The HPLMN includes an AF entity, a UDM entity, an AUSF entity, an ARPF entity, an H-AMF entity, an H-SMF entity, an H-PCF entity, an H-UPF entity, and the like. The H-AMF entity is an AMF entity belonging to the HPLMN, the H-SMF entity is an SMF entity belonging to the HPLMN, the H-PCF entity is a PCF entity belonging to the HPLMN, and the H-UPF entity is a UPF entity belonging to the HPLMN. Entities in the HPLMN may communicate with each other through an interface, or may communicate with an entity in the VPLMN through an interface. For example, some policies of a terminal need to be generated and delivered by using the H-PCF entity, and are delivered to the terminal by using the V-PCF entity.

In the network architecture shown in FIG. 2 or FIG. 3, when the terminal is in the roaming scenario, the HPLMN needs to send a parameter to the terminal. The parameter includes, for example, a parameter of a home network such as a preferred public land mobile network (preferred public land mobile network, preferred PLMN) or a preferred radio access technology (preferred radio access technology, preferred RAT). An entity in the HPLMN needs to send the parameter to the terminal by using an entity in the VPLMN. Because the parameters are highly sensitive and have a relatively high security level, the HPLMN needs to protect the parameters from being intercepted or modified by the VPLMN. Therefore, in a process in which the HPLMN sends the parameters to the terminal, the solutions in this application may be implemented, to protect delivery of these parameters.

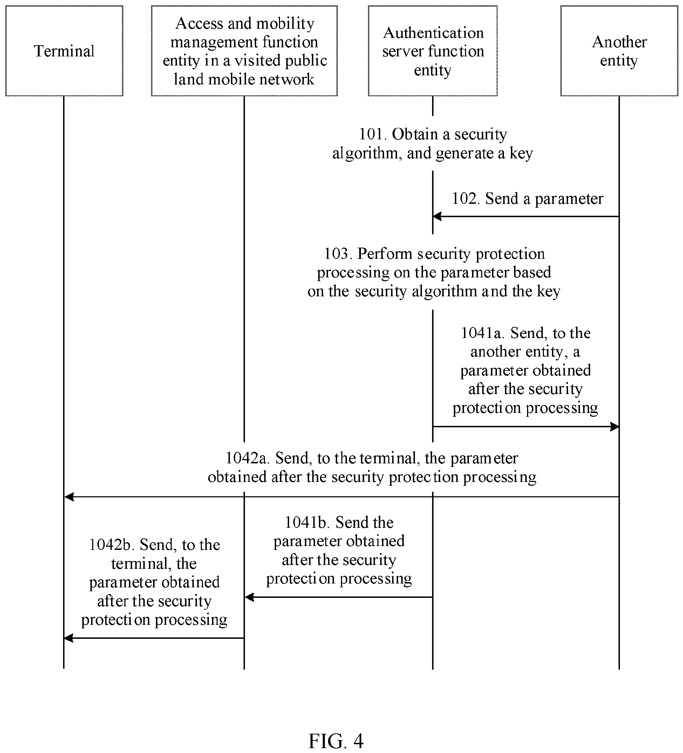

An embodiment of this application provides a parameter protection method, and an AUSF entity, an AMF entity, a terminal, and a system that are based on the method. The method includes: obtaining, by an AUSF entity in an HPLMN, a security algorithm, and generating a key, where the key is used to protect transmission of a parameter between a terminal and the HPLMN; receiving, by the AUSF entity, the parameter from another entity in the HPLMN, where the another entity is an entity that needs to send the parameter to the terminal; and performing, by the AUSF entity, security protection processing on the parameter based on the security algorithm and the key. The AUSF entity in the HPLMN performs, based on the obtained security algorithm and the generated key, security protection processing on the parameter that needs to be sent to the terminal, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission. For example, the method may be shown in FIG. 4.

FIG. 4 is a schematic communication diagram of a parameter protection method according to an embodiment of this application. As shown in FIG. 4, the method includes steps 101 to 103. Optionally, the method may further include steps 1041a to 1042b.

101. An AUSF entity in an HPLMN obtains a security algorithm, and generates a key, where the key is used to protect transmission of a parameter between a terminal and the HPLMN

In an example, the AUSF entity belonging to the HPLMN first needs to obtain the security algorithm, and the AUSF entity automatically generates the key. Both the security algorithm and the key are used to protect transmission of the parameter between the terminal and the HPLMN In other words, the AUSF entity needs to protect, based on the security algorithm and the key, the parameter that needs to be sent by the HPLMN to the terminal. In addition, for different other entities, security algorithms obtained by the AUSF entity may be different, and keys generated by the AUSF entity may be different.

102. Another entity in the HPLMN sends the parameter to the AUSF entity, where the another entity is an entity that needs to send the parameter to the terminal.

In an example, when the another entity belonging to the HPLMN needs to send the parameter to the terminal, the another entity may send the parameter to the AUSF entity in the HPLMN. It may be learned that the parameter sent by the another entity needs to be sent to the terminal. For example, when a UDM entity in the HPLMN needs to send a subscription data parameter to the terminal by using a V-AMF entity, the UDM entity may first send the subscription data parameter to the AUSF entity in the HPLMN. When an H-PCF entity needs to sequentially send a policy information parameter to the terminal by using a V-PCF entity and the V-AMF entity, the H-PCF entity may first send the policy information parameter to the AUSF entity in the HPLMN

103. The AUSF entity performs security protection processing on the parameter based on the security algorithm and the key.

In an example, after the AUSF entity in the HPLMN receives the parameter sent by the another entity in the HPLMN, the AUSF entity may perform security protection processing on the received parameter based on the obtained security algorithm and the generated key.

In an optional implementation, step 103 may have the following several implementations.

First implementation of step 103: The AUSF entity performs encryption processing on the parameter based on the security algorithm and the key.

In an example, after step 102, the AUSF entity in the HPLMN may encrypt the received parameter based on the obtained security algorithm and the generated key, to obtain an encrypted parameter. Second implementation of step 103: The AUSF entity performs integrity protection processing on the parameter based on the security algorithm and the key.

In an example, after setp 102, the AUSF entity in the HPLMN may perform integrity protection on the received parameter based on the obtained security algorithm and the generated key, to obtain a parameter after the integrity protection processing.

Third implementation of step 103: The AUSF entity performs encryption processing and integrity protection processing on the parameter based on the security algorithm and the key.

In an example, after step 102, the AUSF entity in the HPLMN may perform encryption processing and integrity protection processing on the received parameter based on the obtained security algorithm and the generated key, to obtain a parameter after the encryption processing and the integrity protection processing.

In an optional implementation, after step 103, the method further includes:
104. The AUSF entity sends, to the terminal, a parameter obtained by the security protection processing.

In an optional implementation, step 104 may have the following several implementations.

First implementation of step 104:
1041a. The AUSF entity sends, to the another entity, the parameter obtained by the security protection processing.
1042a. The another entity sends, to the terminal, the parameter obtained by the security protection processing.

Second implementation of step 104:
1041b. The AUSF entity sends, to a V-AMF entity, the parameter obtained by the security protection processing.
1042b. The V-AMF entity sends, to the terminal, the parameter obtained by the security protection processing.

Either of the first implementation and the second implementation is selected for implementation. In an example, after performing security protection processing on the parameter sent by the another entity in the HPLMN, the AUSF entity in the HPLMN generates the parameter obtained by the security protection processing. Then, the AUSF entity in the HPLMN sends, to the another entity in the HPLMN, the parameter obtained by the security protection processing. Then, after receiving the parameter obtained by the security protection processing, the another entity in the HPLMN sends, to the terminal, the parameter obtained by the security protection processing. For example, after performing security protection processing on a parameter sent by the H-PCF entity, the AUSF entity in the HPLMN generates a parameter obtained by the security protection processing. The AUSF entity sends, to the H-PCF entity, the parameter obtained by the security protection processing. The H-PCF entity sends, to the V-PCF entity, the parameter obtained by the security protection processing. The V-PCF entity sends, to the V-AMF entity, the parameter obtained by the security protection processing. The V-AMF entity sends, to the terminal, the parameter obtained by the security protection processing. Alternatively, for another example, after performing security protection processing on a parameter sent by the UDM entity in the HPLMN, the AUSF entity in the HPLMN generates a parameter obtained by the security protection processing. The AUSF entity sends, to the UDM entity, the parameter obtained by the security protection processing. The UDM entity sends, to the V-AMF entity, the parameter obtained by the security protection processing. The V-AMF entity sends, to the terminal, the parameter obtained by the security protection processing.

Alternatively, after performing security protection processing on the parameter sent by the another entity in the HPLMN, the AUSF entity in the HPLMN generates the parameter obtained by the security protection processing. The AUSF entity in the HPLMN sends, to the V-AMF entity, the parameter obtained by the security protection processing. The V-AMF entity sends, to the terminal, the parameter obtained by the security protection processing. For example, after performing security protection processing on a parameter sent by the H-PCF entity, the AUSF entity in the HPLMN generates a parameter obtained by the security protection processing. The AUSF entity sends, to the V-PCF entity, the parameter obtained by the security protection processing. The V-PCF entity sends, to the V-AMF entity, the parameter obtained by the security protection processing. The V-AMF entity sends, to the terminal, the parameter obtained by the security protection processing. Alternatively, for another example, after performing security protection processing on the parameter sent by the UDM entity in the HPLMN, the AUSF entity in the HPLMN generates a parameter obtained by the security protection processing. The AUSF entity sends, to the V-AMF entity, the parameter obtained by the security protection processing. The V-AMF entity sends, to the terminal, the parameter obtained by the security protection processing. In this embodiment, the AUSF entity in the HPLMN obtains the security algorithm, and generates the key. The key is used to protect transmission of the parameter between the terminal and the HPLMN. The another entity in the HPLMN sends the parameter to the AUSF entity. The another entity is an entity that needs to send the parameter to the terminal. The AUSF entity performs security protection processing on the parameter based on the security algorithm and the key. The AUSF entity in the HPLMN performs, based on the obtained security algorithm and the generated key, security protection processing on the parameter that needs to be sent to the terminal, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission.

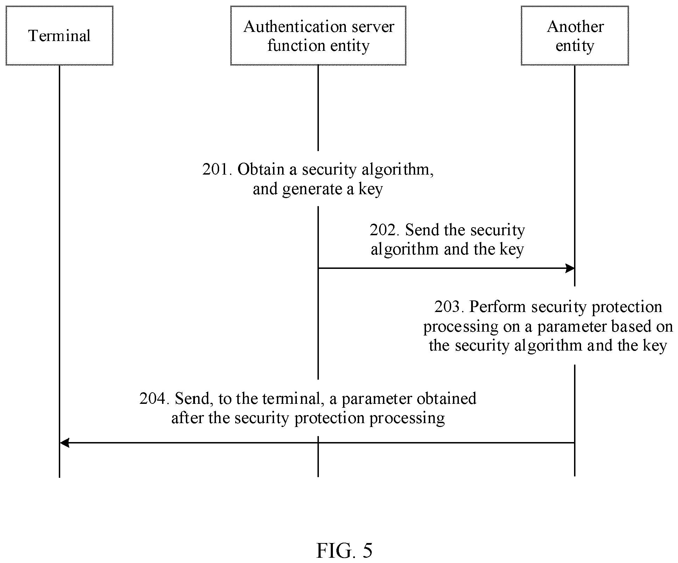

An embodiment of this application provides another parameter protection method, and an AUSF entity, an AMF entity, a terminal, and a system that are based on the method. The method includes: obtaining, by an AUSF entity in an HPLMN, a security algorithm, and generating a key, where the key is used to protect transmission of a parameter between a terminal and the HPLMN; and sending, by the AUSF entity, the security algorithm and the key to another entity in the HPLMN, where the another entity is an entity that needs to send the parameter to the terminal. Correspondingly, after receiving the security algorithm and the key from the AUSF entity, the another entity in the HPLMN performs security protection processing on the parameter. Further, after the another entity in the HPLMN receives the security algorithm and the key, the another entity may perform security protection processing on the parameter based on the security algorithm and the key, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission. For example, the method may be shown in FIG. 5.

FIG. 5 is a schematic communication diagram of another parameter protection method according to an embodiment of this application. As shown in FIG. 5, the method includes steps 201 to 203. Optionally, the method may further include step 204.

201. An AUSF entity in an HPLMN obtains a security algorithm, and generates a key, where the key is used to protect transmission of a parameter between a terminal and the HPLMN

In an example, the AUSF entity belonging to the HPLMN first needs to obtain the security algorithm, and the AUSF entity automatically generates the key. Both the security algorithm and the key are used to protect transmission of the parameter between the terminal and the HPLMN In other words, the AUSF entity needs to protect, based on the security algorithm and the key, the parameter that needs to be sent by the HPLMN to the terminal.

202. The AUSF entity sends the security algorithm and the key to another entity in the HPLMN, where the another entity is an entity that needs to send the parameter to the terminal.

In an example, the AUSF entity belonging to the HPLMN sends the obtained security algorithm and the generated key to the another entity that is in the HPLMN and that needs to send the parameter to the terminal. The another entity may be, for example, a UDM entity or an H-PCF entity in the HPLMN. In addition, for different other entities, security algorithms obtained by the AUSF entity may be different, and keys generated by the AUSF entity may be different.

For example, the another entity is the H-PCF entity. In this case, the AUSF entity obtains a security algorithm corresponding to the H-PCF entity for the H-PCF entity, and generates a key corresponding to the H-PCF entity. Then, the AUSF entity sends, to the H-PCF entity through an interface between the AUSF entity and the H-PCF entity, the security algorithm corresponding to the H-PCF entity and the key corresponding to the H-PCF entity. Alternatively, the AUSF entity sends, to the H-AMF entity, the security algorithm corresponding to the H-PCF entity and the key corresponding to the H-PCF entity, and the H-AMF entity sends, to the H-PCF entity, the security algorithm corresponding to the H-PCF entity and the key corresponding to the H-PCF entity. For another example, the another entity is the UDM entity. In this case, the AUSF entity obtains a security algorithm corresponding to the UDM entity for the UDM entity, and generates a key corresponding to the UDM entity. Then, the AUSF entity sends, to the UDM entity through an interface between the AUSF entity and the UDM entity, the security algorithm corresponding to the UDM entity and the key corresponding to the UDM entity. Alternatively, the AUSF entity sends, to the H-AMF entity, the security algorithm corresponding to the UDM entity and the key corresponding to the UDM entity, and the H-AMF entity sends, to the UDM entity, the security algorithm corresponding to the UDM entity and the key corresponding to the UDM entity.

203. The another entity performs security protection processing on the parameter based on the security algorithm and the key.

In an example, after the another entity in the HPLMN receives the security algorithm and the key that are sent by the AUSF entity, the another entity performs, by using the security algorithm and the key, security protection processing on the parameter to be sent to the terminal.

In an optional implementation, step 203 may have the following several implementations.

First implementation of step 203: The another entity performs encryption processing on the parameter based on the security algorithm and the key.

In an example, after setp 202, the another entity in the HPLMN may encrypt the received parameter based on the obtained security algorithm and the generated key, to obtain an encrypted parameter. Second implementation of step 203: The another entity performs integrity protection processing on the parameter based on the security algorithm and the key.

In an example, after step 202, the another entity in the HPLMN may perform integrity protection on the received parameter based on the obtained security algorithm and the generated key, to obtain a parameter after the integrity protection processing.

Third implementation of step 203: The another entity performs encryption processing and integrity protection processing on the parameter based on the security algorithm and the key.

In an example, after step 202, the another entity in the HPLMN may perform encryption processing and integrity protection processing on the received parameter based on the obtained security algorithm and the generated key, to obtain a parameter after the encryption processing and the integrity protection processing.

In an optional implementation, after step 203, the method may further include step 204.

204. The another entity sends, to the terminal, the parameter obtained by the security protection processing.

For example, the another entity is the H-PCF entity. After performing security protection on the parameter, the H-PCF entity sends, to a V-PCF entity, the parameter obtained by the security protection processing. The V-PCF entity sends, to a V-AMF entity, the parameter obtained by the security protection processing. The V-AMF entity sends, to the terminal, the parameter obtained by the security protection processing. Alternatively, for another example, the another entity is the UDM entity in the HPLMN. After performing security protection on the parameter, the UDM entity sends, to a V-AMF entity, the parameter obtained by the security protection processing. The V-AMF entity sends, to the terminal, the parameter obtained by the security protection processing. In this embodiment, the AUSF entity in the HPLMN obtains the security algorithm and generates the key. The key is used to protect transmission of the parameter between the terminal and the HPLMN. The AUSF entity sends the security algorithm and the key to the another entity in the HPLMN. The another entity is an entity that needs to send the parameter to the terminal. Then, after the another entity in the HPLMN receives the security algorithm and the key, the another entity may perform security protection processing on the parameter based on the security algorithm and the key, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission.

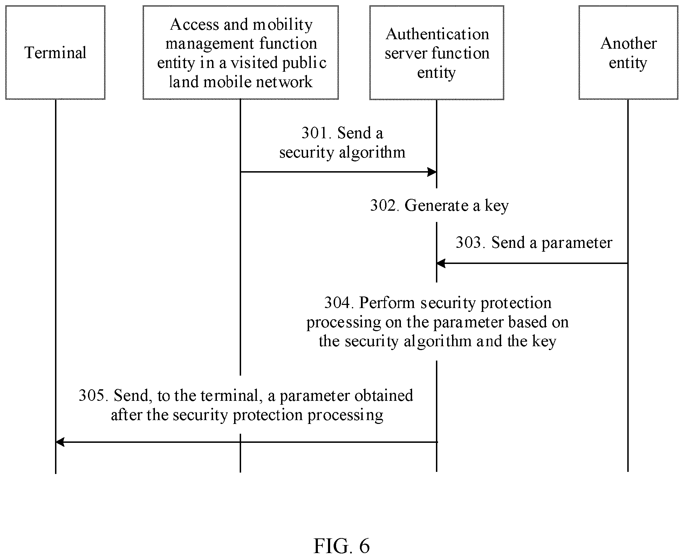

FIG. 6 is a schematic communication diagram of still another parameter protection method according to an embodiment of this application. As shown in FIG. 6, the method is specifically as follows.

301. A V-AMF entity sends a security algorithm to an AUSF entity in an HPLMN, where the security algorithm is a security algorithm negotiated by a terminal with the V-AMF entity.

In an example, the terminal initiates a registration procedure to the HPLMN. In a registration process of the terminal, the V-AMF entity negotiates with the terminal, to negotiate a security algorithm. Then, the V-AMF entity sends the negotiated security algorithm to the AUSF entity in the HPLMN, so that the AUSF entity obtains the security algorithm used to perform security protection processing on a parameter.

302. The AUSF entity generates a key.

In an example, for this step, refer to step 101 in FIG. 4. Details are not described again.

303. Another entity in the HPLMN sends a parameter to the AUSF entity, where the another entity is an entity that needs to send the parameter to the terminal.

In an example, for this step, refer to step 102 in FIG. 4. Details are not described again.

304. The AUSF entity performs security protection processing on the parameter based on the security algorithm and the key.

In an example, for this step, refer to step 103 in FIG. 4. Details are not described again.

305. The AUSF entity sends, to the terminal, a parameter obtained by the security protection processing.

In an example, for this step, refer to step 104 in FIG. 4. Details are not described again.

In this embodiment, the V-AMF entity sends the security algorithm to the AUSF entity in the HPLMN. The security algorithm is the security algorithm negotiated by the terminal with the V-AMF entity. The AUSF entity generates the key. The key is used to protect transmission of the parameter between the terminal and the HPLMN. The another entity in the HPLMN sends the parameter to the AUSF entity. The another entity is an entity that needs to send the parameter to the terminal. The AUSF entity performs security protection processing on the parameter based on the security algorithm and the key. The AUSF entity in the HPLMN performs, based on the security algorithm negotiated by the terminal with the V-AMF entity and the key generated by the AUSF entity, security protection processing on the parameter that needs to be sent to the terminal, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission.

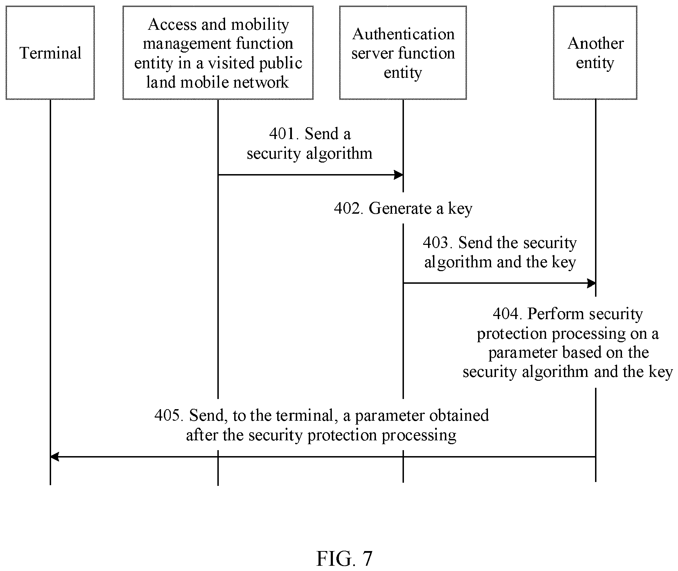

FIG. 6 is a schematic communication diagram of yet another parameter protection method according to an embodiment of this application. As shown in FIG. 7, the method is specifically as follows.

401. A V-AMF entity sends a security algorithm to an AUSF entity in an HPLMN, where the security algorithm is a security algorithm negotiated by a terminal with the V-AMF entity.

In an example, for this step, refer to step 301 in FIG. 6. Details are not described again.

402. The AUSF entity generates a key, where the key is used to protect transmission of a parameter between the terminal and the HPLMN

In an example, for this step, refer to step 201 in FIG. 5. Details are not described again.

403. The AUSF entity sends the security algorithm and the key to another entity in the HPLMN, where the another entity is an entity that needs to send the parameter to the terminal.

In an example, for this step, refer to step 202 in FIG. 5. Details are not described again.

404. The another entity performs security protection processing on the parameter based on the security algorithm and the key.

In an example, for this step, refer to step 203 in FIG. 5. Details are not described again.

405. The another entity sends, to the terminal, a parameter obtained by the security protection processing.

In an example, for this step, refer to step 204 in FIG. 5. Details are not described again.

In this embodiment, the V-AMF entity sends the security algorithm to the AUSF entity in the HPLMN. The security algorithm is the security algorithm negotiated by the terminal with the V-AMF entity. The AUSF entity obtains the security algorithm and generates the key. The key is used to protect transmission of the parameter between the terminal and the HPLMN. The AUSF entity sends the security algorithm and the key to the another entity in the HPLMN. The another entity is an entity that needs to send the parameter to the terminal. Then, the AUSF entity may send, to the another entity in the HPLMN, the security algorithm negotiated by the terminal with the V-AMF entity. After the another entity in the HPLMN receives the security algorithm and the key, the another entity may perform security protection processing on the parameter based on the security algorithm and the key, and then the HPLMN protects the parameter that is to be sent to the terminal. Therefore, in a process in which the parameter is forwarded to the terminal by using an entity in a VPLMN, because security protection has been performed on the parameter, the parameter is not intercepted or modified by the entity in the VPLMN, thereby improving security of the parameter sent by the HPLMN to the terminal during the transmission.

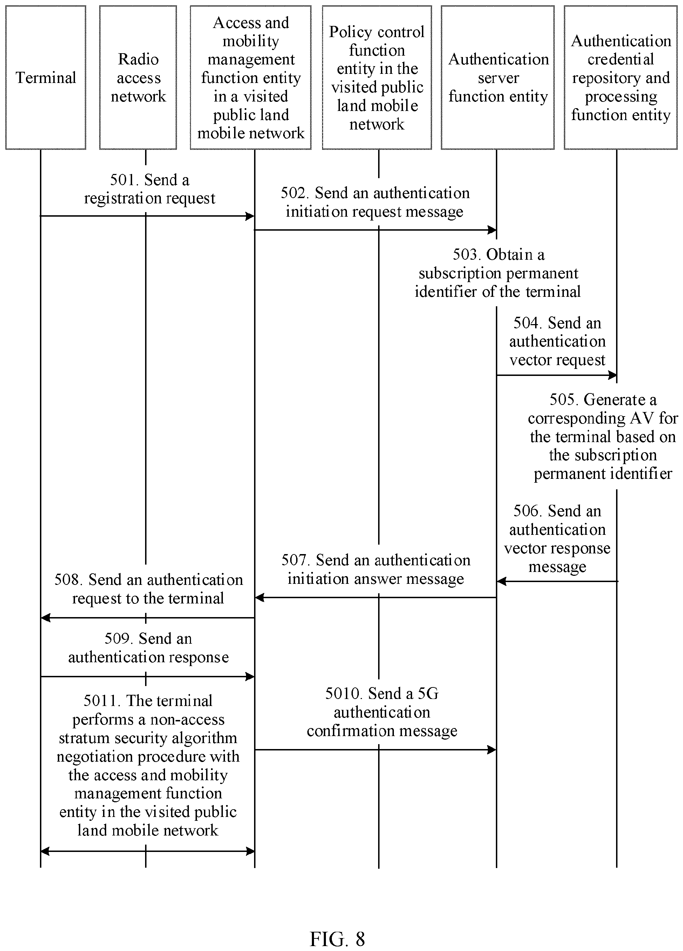

In an optional implementation, FIG. 8 is a schematic communication diagram of a terminal registration procedure according to an embodiment of this application. Based on the embodiment shown in FIG. 6 or FIG. 7, steps in FIG. 8 may be performed before step 301 or step 401 is performed.

501. The terminal sends a registration request to the V-AMF entity.

In an example, the registration request represents that the terminal initiates a registration procedure. The registration procedure may be initial registration, mobility registration, or periodic registration. 502. The V-AMF entity sends an authentication initiation request (authentication initiation request, AIR) message to the AUSF entity in the HPLMN

In an example, a subscriber identifier of the terminal is carried in the AIR message. The subscriber identifier of the terminal may be a subscription permanent identifier (subscription permanent identifier, SUPI), or the subscriber identifier of the terminal is an anonymous SUPI. The anonymous SUPI is a subscription concealed identifier (subscription concealed identifier, SUCI). 503. The AUSF entity obtains an SUPI of the terminal.

In an example, if the SUPI is carried in the AIR message received by the AUSF entity, the AUSF entity may directly obtain the SUPI in the AIR message. If the SUCI is carried in the AIR message received by the AUSF entity, the AUSF entity decrypts the SUCI by using a private key, to obtain the SUPI.

504. The AUSF entity sends an authentication vector (authentication vector, AV) request to an ARPF entity, where the AV request carries the SUPI.

505. The ARPF entity generates a corresponding AV for the terminal based on the SUPI.

506. The ARPF entity sends an AV response message to the AUSF entity, where the AV response message includes one or more AVs.

In an example, the AV includes a key Kasme^{∗}, where amse refers to an access security management entity (access security management entity, amse), and the AV further includes an expected response (expected response, XRES^{∗}), a random challenge (random challenge, random challenge, RAND), and an authentication token (authentication token, AUTN).

507. The AUSF entity sends an authentication initiation answer (authentication initiation answer, AIA) message to the V-AMF entity, where the AIA message carries the AV, or an AV^{∗} generated after the AUSF entity processes the AV.

In an example, the AV^{∗} includes the key Kasme^{∗} and a hash of the expected response (hash of XRES^{∗}, HXRES^{∗}), and a secure hash algorithm (secure hash algorithm, SHA) is provided. In this case, a value of the HXRES^{∗} is SHA-256 (XRES^{∗} ∥ RAND).

508. The V-AMF entity sends an authentication request to the terminal.

509. The terminal sends an authentication response to the V-AMF entity.

5010. The V-AMF entity sends a 5G authentication confirmation (5G authentication confirmation, 5G-AC) message to the AUSF entity.

In an example, step 5010 may be performed or may not be performed.

5011. The terminal performs a non-access stratum (non-access stratum, NAS) security algorithm negotiation procedure with the V-AMF entity, to negotiate a NAS security algorithm used between the terminal and the V-AMF entity.

By performing the foregoing steps, the V-AMF entity may have the security algorithm that is to be sent to the AUSF entity in the HPLMN

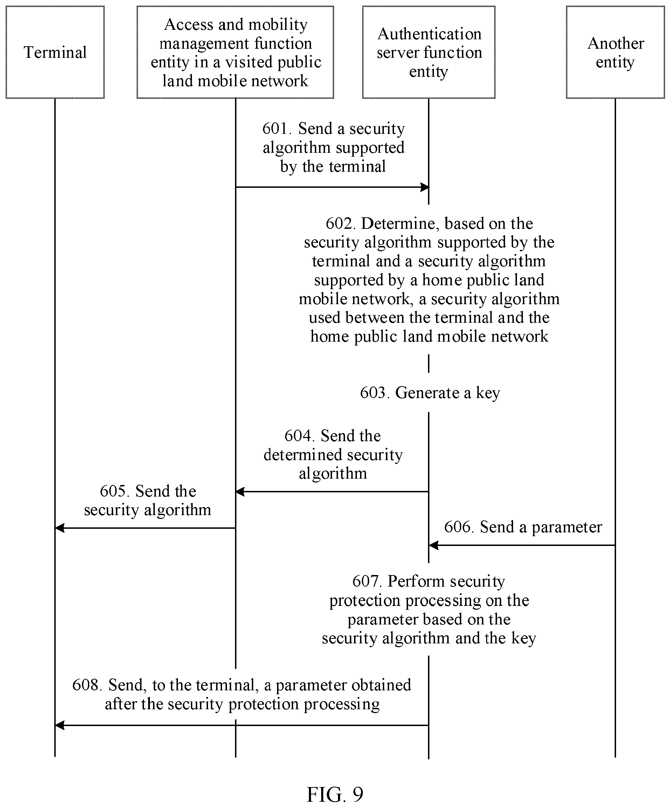

FIG. 9 is a schematic communication diagram of still yet another parameter protection method according to an embodiment of this application. As shown in FIG. 9, the method is specifically as follows.

601. A V-AMF entity sends a security algorithm supported by a terminal to an AUSF entity.

In an example, the V-AMF entity has the security algorithm supported by the terminal. The V-AMF entity sends the security algorithm supported by the terminal to the AUSF entity. Specifically, the V-AMF entity sends security capability information of the terminal to the AUSF entity. The security capability information includes the security algorithm supported by the terminal, and each algorithm has a priority. In this embodiment, before step 603, the steps in FIG. 8 may alternatively be performed. Then, the action that a V-AMF entity sends a security algorithm supported by a terminal to an AUSF entity may be performed in step 502 in FIG. 8. Alternatively, the action that a V-AMF entity sends a security algorithm supported by a terminal to an AUSF entity may be performed in step 5010 in FIG. 8. Alternatively, the action that a V-AMF entity sends a security algorithm supported by a terminal to an AUSF entity may be performed by using a separate message.

Alternatively, in an optional implementation, step 601 may be: The V-AMF entity sends indication information to the AUSF entity, where the indication information indicates the security algorithm supported by the terminal; and then, the AUSF entity determines, based on the indication information, the security algorithm supported by the terminal.

602. The AUSF entity determines, based on the security algorithm supported by the terminal and a security algorithm supported by an HPLMN, a security algorithm used between the terminal and the HPLMN

In an example, the AUSF entity has a pre-stored security algorithm list. The security algorithm list includes the security algorithm supported by the HPLMN, and each algorithm in the security algorithm list has a priority. The AUSF entity determines, based on the security algorithm supported by the terminal and the pre-stored security algorithm list, an algorithm that is supported by both the terminal and the HPLMN and that has a highest priority, and uses the algorithm as the security algorithm used between the terminal and the HPLMN

For example, the security algorithm supported by the terminal and received by the AUSF entity includes an algorithm 1, an algorithm 2, an algorithm 3, an algorithm 4, and an algorithm 5, and an algorithm priority is algorithm 1 > algorithm 5 > algorithm 4 > algorithm 3 > algorithm 2. The security algorithm list of the AUSF entity includes the algorithm 2, the algorithm 3, and the algorithm 5, and an algorithm priority is algorithm 5 > algorithm 3 > algorithm 2. Therefore, the AUSF entity determines the algorithm 5 as the security algorithm used between the terminal and the HPLMN.

603. The AUSF entity generates a key, where the key is used to protect transmission of a parameter between the terminal and the HPLMN.

In an example, for this step, refer to step 101 in FIG. 4. Details are not described again.

604. The AUSF entity sends the determined security algorithm to the V-AMF entity.

In an example, the action that the AUSF entity sends the determined security algorithm to the V-AMF entity is performed by using step 604 that is separate signaling. Alternatively, in this embodiment, before step 603, the steps in FIG. 8 may be performed. Then, the action that the AUSF entity sends the determined security algorithm to the V-AMF entity may be performed in step 507 in FIG. 8.

In the foregoing two manners, step 604 needs to be performed after step 602.

605. The V-AMF entity sends the security algorithm to the terminal.

606. Another entity in the HPLMN sends the parameter to the AUSF entity, where the another entity is an entity that needs to send the parameter to the terminal.

In an example, for this step, refer to step 102 in FIG. 4. Details are not described again.

607. The AUSF entity performs security protection processing on the parameter based on the security algorithm and the key.

In an example, for this step, refer to step 103 in FIG. 4. Details are not described again.

608. The AUSF entity sends, to the terminal, a parameter obtained by the security protection processing.

In an example, for this step, refer to step 104 in FIG. 4. Details are not described again.

In this embodiment, the V-AMF entity sends, to the AUSF entity, the security algorithm supported by the terminal, and the AUSF entity determines the security algorithm based on the security algorithm supported by the terminal and the security algorithm supported by the HPLMN. Another manner in which the AUSF entity obtains the security algorithm is provided.

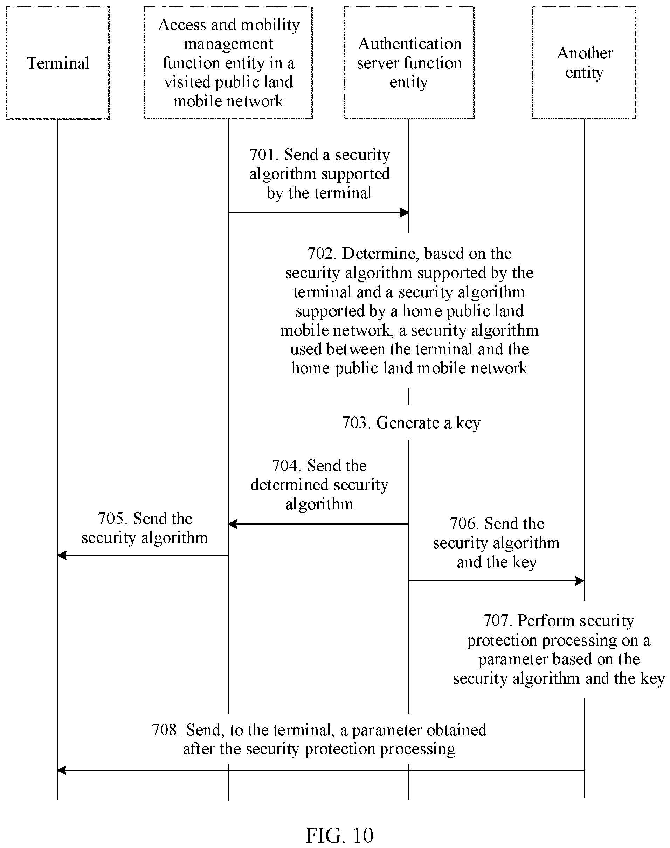

FIG. 10 is a schematic communication diagram of a still yet further parameter protection method according to an embodiment of this application. As shown in FIG. 10, the method is specifically as follows.

701. A V-AMF entity sends a security algorithm supported by a terminal to an AUSF entity.

In an example, for this step, refer to step 601 in FIG. 9. Details are not described again.

702. The AUSF entity determines, based on the security algorithm supported by the terminal and a security algorithm supported by an HPLMN, a security algorithm used between the terminal and the HPLMN

In an example, for this step, refer to step 602 in FIG. 9. Details are not described again.

703. The AUSF entity generates a key, where the key is used to protect transmission of a parameter between the terminal and the HPLMN.

In an example, for this step, refer to step 201 in FIG. 5. Details are not described again.

704. The AUSF entity sends the determined security algorithm to the V-AMF entity.

In an example, for this step, refer to step 604 in FIG. 9. Details are not described again.

705. The V-AMF entity sends the security algorithm to the terminal.

In an example, for this step, refer to step 605 in FIG. 9. Details are not described again.

706. The AUSF entity sends the security algorithm and the key to another entity in the HPLMN, where the another entity is an entity that needs to send the parameter to the terminal.

In an example, for this step, refer to step 202 in FIG. 5. Details are not described again.

707. The another entity performs security protection processing on the parameter based on the security algorithm and the key.

In an example, for this step, refer to step 203 in FIG. 5. Details are not described again.

708. The another entity sends, to the terminal, a parameter obtained by the security protection processing.

In an example, for this step, refer to step 204 in FIG. 5. Details are not described again.

In this embodiment, the V-AMF entity sends, to the AUSF entity, the security algorithm supported by the terminal, and the AUSF entity determines the security algorithm based on the security algorithm supported by the terminal and the security algorithm supported by the HPLMN. Another manner in which the AUSF entity obtains the security algorithm is provided.

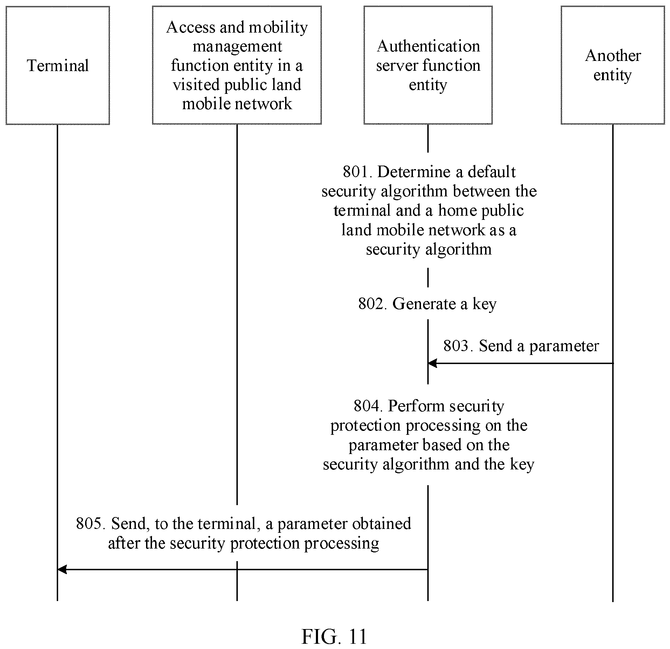

FIG. 11 is a schematic communication diagram of a further parameter protection method according to an embodiment of this application. As shown in FIG. 11, the method is specifically as follows. 801. An AUSF entity determines a default security algorithm between a terminal and an HPLMN as a security algorithm.

In an example, a default security algorithm has been set in the terminal, and the default security algorithm is an algorithm that may be used when the HPLMN performs security protection processing on a parameter. In addition, the default security algorithm has also been set in the HPLMN, and the default security algorithm is stored in the AUSF entity. Then, the AUSF entity may directly determine the default security algorithm as the security algorithm.

802. The AUSF entity generates a key.

In an example, for this step, refer to step 101 in FIG. 4. Details are not described again.

803. Another entity in the HPLMN sends a parameter to the AUSF entity, where the another entity is an entity that needs to send the parameter to the terminal.

In an example, for this step, refer to step 102 in FIG. 4. Details are not described again.

804. The AUSF entity performs security protection processing on the parameter based on the security algorithm and the key.

In an example, for this step, refer to step 103 in FIG. 4. Details are not described again.

805. The AUSF entity sends, to the terminal, a parameter obtained by the security protection processing.

In an example, for this step, refer to step 104 in FIG. 4. Details are not described again.

In this embodiment, the AUSF entity directly determines the default security algorithm between the terminal and the HPLMN as the security algorithm. Another manner in which the AUSF entity obtains the security algorithm is provided.

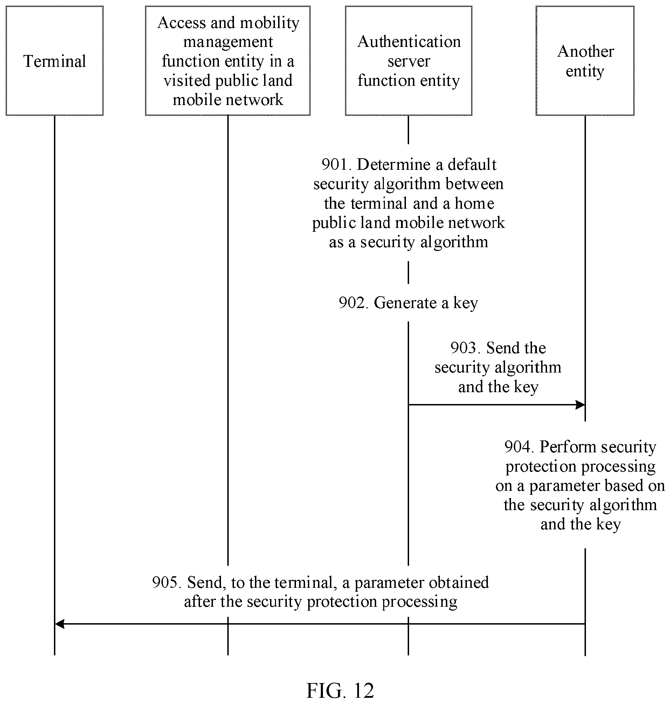

FIG. 12 is a schematic communication diagram of a still further parameter protection method according to an embodiment of this application. As shown in FIG. 12, the method is specifically as follows.

901. An AUSF entity in an HPLMN determines a default security algorithm between a terminal and the HPLMN as a security algorithm.

In an example, for this step, refer to step 801 in FIG. 11. Details are not described again.

902. The AUSF entity generates a key, where the key is used to protect transmission of a parameter between the terminal and the HPLMN

In an example, for this step, refer to step 201 in FIG. 5. Details are not described again.

903. The AUSF entity sends the security algorithm and the key to another entity in the HPLMN, where the another entity is an entity that needs to send the parameter to the terminal.

In an example, for this step, refer to step 202 in FIG. 5. Details are not described again.

904. The another entity performs security protection processing on the parameter based on the security algorithm and the key.

In an example, for this step, refer to step 203 in FIG. 5. Details are not described again.

905. The another entity sends, to the terminal, a parameter obtained by the security protection processing.

In an example, for this step, refer to step 204 in FIG. 5. Details are not described again.

In this embodiment, the AUSF entity directly determines the default security algorithm between the terminal and the HPLMN as the security algorithm. Another manner in which the AUSF entity obtains the security algorithm is provided.

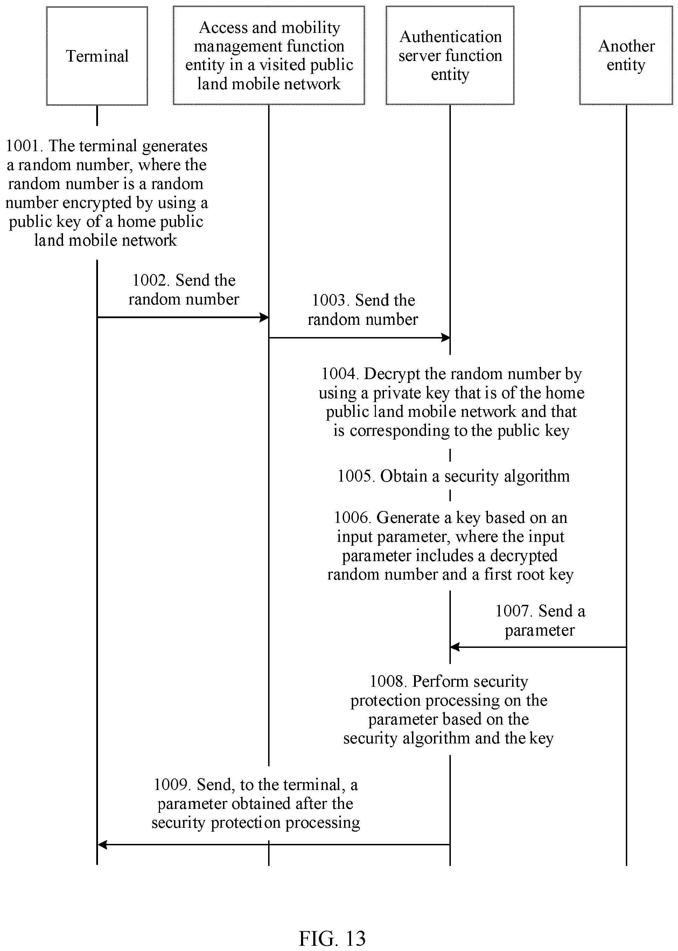

FIG. 13 is a schematic communication diagram of a yet further parameter protection method according to an embodiment of this application. As shown in FIG. 13, the method is specifically as follows.

1001. A terminal generates a random number, where the random number is a random number encrypted by using a public key of an HPLMN.

In an example, the terminal generates a random number, and then encrypts the random number by using the public key of the HPLMN, to obtain an encrypted random number.

For example, the terminal generates a random number, and then, the terminal may encrypt the random number by using the public key of the HPLMN, to obtain an encrypted random number. Alternatively, the terminal generates a random number, the terminal has an SUPI, and then, the terminal may encrypt the random number and the SUPI together by using the public key of the HPLMN, to obtain an encrypted random number.

In an optional implementation, step 1001 in this embodiment is combined with FIG. 8, and step 1001 is performed before step 501 in FIG. 8.

1002. The terminal sends the random number to a V-AMF entity.

In an optional implementation, step 1002 in this embodiment is combined with FIG. 8, and an action of sending the random number to the V-AMF entity in step 1002 is performed in step 501 in FIG. 8.

1003. The V-AMF entity sends the random number to an AUSF entity in the HPLMN

In an optional implementation, step 1003 in this embodiment is combined with FIG. 8, and an action of sending the random number to the AUSF entity in step 1003 is performed in step 502 in FIG. 8.

1004. The AUSF entity decrypts the random number by using a private key that is of the HPLMN and that is corresponding to the public key.

In an example, the AUSF entity has the private key of the HPLMN, and the private key is corresponding to the public key in step 1001. The AUSF entity decrypts the received random number by using the private key, to obtain the random number.

In an optional implementation, step 1004 in this embodiment is combined with FIG. 8, and an action of decrypting the random number in step 1004 is performed in step 503 in FIG. 8.

1005. The AUSF entity in the HPLMN obtains a security algorithm.

In an example, this step may be implemented by performing step 301 in FIG. 6, or performing step 601 and step 602 in FIG. 9, or performing step 801 in FIG. 11.

1006. The AUSF entity generates a key based on an input parameter, where the input parameter includes a decrypted random number and a first root key, and the first root key is generated by an ARPF entity in the HPLMN in a security authentication process between the terminal and the V-AMF entity.

In an example, in this implementation, the terminal registration procedure shown in FIG. 8 may be performed before any step before step 1006. Further, it may be learned from step 506 in FIG. 8 that when FIG. 8 is performed, the security authentication process between the terminal and the V-AMF entity may be completed, and then the AUSF entity obtains the Kasme^{∗} in the AV. The Kasme^{∗} in the AV is referred to as the first root key. Therefore, the AUSF entity may generate a key HPLMN-Key based on the decrypted random number obtained in step 1004 and the first root key.

In an optional implementation, the input parameter further includes at least one of the following: an identifier of another entity, an identifier of the security algorithm, and a random number generated by the AUSF entity.

In an example, the AUSF entity may generate, based on an identifier of another entity that needs to send the parameter to the terminal, the decrypted random number obtained in step 1004, and the first root key, a key corresponding to the another entity that needs to send the parameter to the terminal. For example, if the another entity is a UDM entity, the UDM entity may send an identifier of the UDM entity to the AUSF entity. The AUSF entity generates, based on the identifier of the UDM entity, the decrypted random number, and the first root key, a key corresponding to the UDM entity. For another example, if the another entity is an H-PCF entity, the H-PCF entity may send an identifier of the H-PCF entity to the AUSF entity. The AUSF entity generates, based on the identifier of the H-PCF entity, the decrypted random number, and the first root key, a key corresponding to the H-PCF entity.

Alternatively, the AUSF entity may perform key derivation based on the obtained identifier of the security algorithm, the decrypted random number, and the first root key, to obtain the key. Alternatively, the AUSF entity may perform key derivation based on the obtained identifier of the security algorithm, the identifier of the another entity, the decrypted random number, and the first root key, to obtain the key.

Optionally, the AUSF entity obtains a final key between the HPLMN and the terminal based on the input parameter by using a key derivation function (key derivation function, KDF) function. This is implemented in the following manners:
Manner 1: The AUSF entity performs key derivation on the first root key and the decrypted random number by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 2: The AUSF entity performs key derivation on the first root key, the decrypted random number, and the identifier of the another entity by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 3: The AUSF entity performs key derivation on the first root key and the decrypted random number by using the KDF function, to obtain a key 1, and the AUSF entity performs key derivation on the key 1, the identifier of the another entity, and the identifier of the security algorithm by using the KDF function, to obtain a key 2. The key 2 is the final secure key between the HPLMN and the terminal.
Manner 4: The AUSF entity performs key derivation on the first root key, the decrypted random number, and the identifier of the security algorithm by using the KDF function, to obtain a key 1. The key 1 is the final secure key between the HPLMN and the terminal.
Manner 5: The AUSF entity performs key derivation on the first root key, the decrypted random number, and the identifier of the another entity by using the KDF function, to obtain a key 1. The key 1 is the final secure key between the HPLMN and the terminal.
Manner 6: The AUSF entity performs key derivation on the first root key, the decrypted random number, the identifier of the another entity, and the identifier of the security algorithm by using the KDF function, to obtain a key 1. The key 1 is the final secure key between the HPLMN and the terminal.
Manner 7: The AUSF entity performs key derivation on the first root key by using the KDF function, to obtain a key 1. The key 1 is the final secure key between the HPLMN and the terminal. Optionally, for the foregoing manner 1 to manner 7, the random number generated by the AUSF entity may alternatively be used as the input parameter for generating the key 1.

Because the security algorithm includes an encryption algorithm and/or an integrity protection algorithm, the identifier of the security algorithm is an identifier of the encryption algorithm and/or an identifier of the integrity protection algorithm. Therefore, when the identifier of the security algorithm is used as an input, when the security algorithm includes the encryption algorithm, one of the foregoing seven manners needs to be performed once to obtain an encryption key; when the security algorithm includes the integrity protection algorithm, one of the foregoing seven manners needs to be performed once to obtain an integrity protection key; or when the security algorithm includes the encryption algorithm and the integrity protection algorithm, one of the foregoing seven manners needs to be performed once to obtain an encryption key, and one of the foregoing seven manners needs to be performed once to obtain an integrity protecion key.

1007. Another entity in the HPLMN sends a parameter to the AUSF entity, where the another entity is an entity that needs to send the parameter to the terminal.

In an example, for this step, refer to step 102 in FIG. 4. Details are not described again.

1008. The AUSF entity performs security protection processing on the parameter based on the security algorithm and the key.

In an example, for this step, refer to step 103 in FIG. 4. Details are not described again.

1009. The AUSF entity sends, to the terminal, a parameter obtained by the security protection processing.

In an example, for this step, refer to step 104 in FIG. 4. Details are not described again.

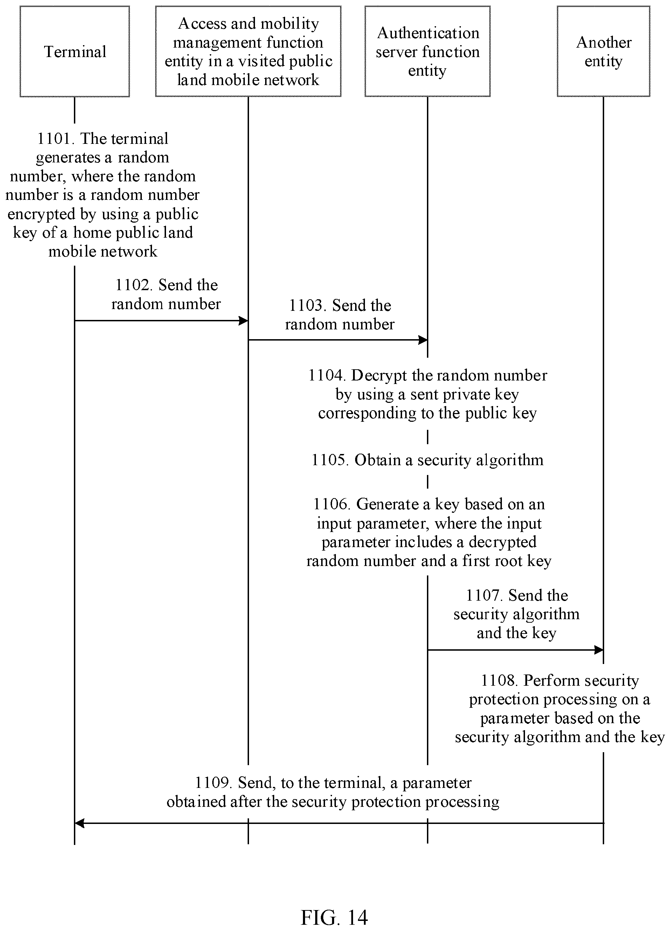

In this embodiment, the AUSF entity decrypts the random number by using the private key that is of the HPLMN and that is corresponding to the public key. The random number is a random number that is received by the AUSF entity from the V-AMF entity and that is encrypted by using the public key of the HPLMN. The AUSF entity generates the key based on the decrypted random number and the first root key. The first root key is generated by the ARPF entity in the HPLMN in the security authentication process between the terminal and the V-AMF entity. Therefore, a manner in which the AUSF entity generates the key is provided. Because the random number and the first root key are used to generate the key, and the random number sent by the V-AMF entity to the AUSF entity is encrypted, a VPLMN cannot learn of real information of the random number. Further, after the AUSF entity in the HPLMN generates the key by using the random number and the first root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn of the random number used to perform security protection processing on the parameter, the parameter is not intercepted or modified by the entity in the VPLMN, thereby improving security of the parameter sent by the HPLMN to the terminal during the transmission. FIG. 14 is a schematic communication diagram of a still yet further parameter protection method according to an embodiment of this application. As shown in FIG. 14, the method is specifically as follows.

1101. A terminal generates a random number.

In an example, for this step, refer to step 1001 in FIG. 13. Details are not described again.

In an optional implementation, step 1101 in this embodiment is combined with FIG. 8, and step 1101 is performed before step 501 in FIG. 8.

1102. The terminal sends the random number to a V-AMF entity.

In an example, for this step, refer to step 1002 in FIG. 13. Details are not described again.

In an optional implementation, step 1102 in this embodiment is combined with FIG. 8, and an action of sending the random number to the V-AMF entity in step 1102 is performed in step 501 in FIG. 8.

1103. The V-AMF entity sends the random number to an AUSF entity in an HPLMN, where the random number is a random number encrypted by using a public key of the HPLMN.

In an example, for this step, refer to step 1003 in FIG. 13. Details are not described again.

In an optional implementation, step 1103 in this embodiment is combined with FIG. 8, and an action of sending the random number to the AUSF entity in step 1103 is performed in step 502 in FIG. 8.

1104. The AUSF entity decrypts the random number by using a private key that is of the HPLMN and that is corresponding to the public key.

In an example, for this step, refer to step 1001 in FIG. 14. Details are not described again.

In an optional implementation, step 1104 in this embodiment is combined with FIG. 8, and an action of decrypting the random number in step 1104 is performed in step 503 in FIG. 8.

1105. The AUSF entity in the HPLMN obtains a security algorithm.

In an example, this step may be implemented by performing step 401 in FIG. 7, or performing step 701 and step 702 in FIG. 10, or performing step 901 in FIG. 12.

1106. The AUSF entity generates a key based on an input parameter, where the input parameter includes a decrypted random number and a first root key, and the first root key is generated by an ARPF entity in the HPLMN in a security authentication process between the terminal and the V-AMF entity.

In an optional implementation, the input parameter further includes one or both of the following: an identifier of another entity and an identifier of the security algorithm.

In an example, for this step, refer to step 1006 in FIG. 14. Details are not described again.

1107. The AUSF entity sends the security algorithm and the key to another entity in the HPLMN, where the another entity is an entity that needs to send a parameter to the terminal.

In an example, for this step, refer to step 202 in FIG. 5. Details are not described again.

1108. The another entity performs security protection processing on the parameter based on the security algorithm and the key.

In an example, for this step, refer to step 203 in FIG. 5. Details are not described again.

1109. The another entity sends, to the terminal, a parameter obtained by the security protection processing.

In an example, for this step, refer to step 204 in FIG. 5. Details are not described again.

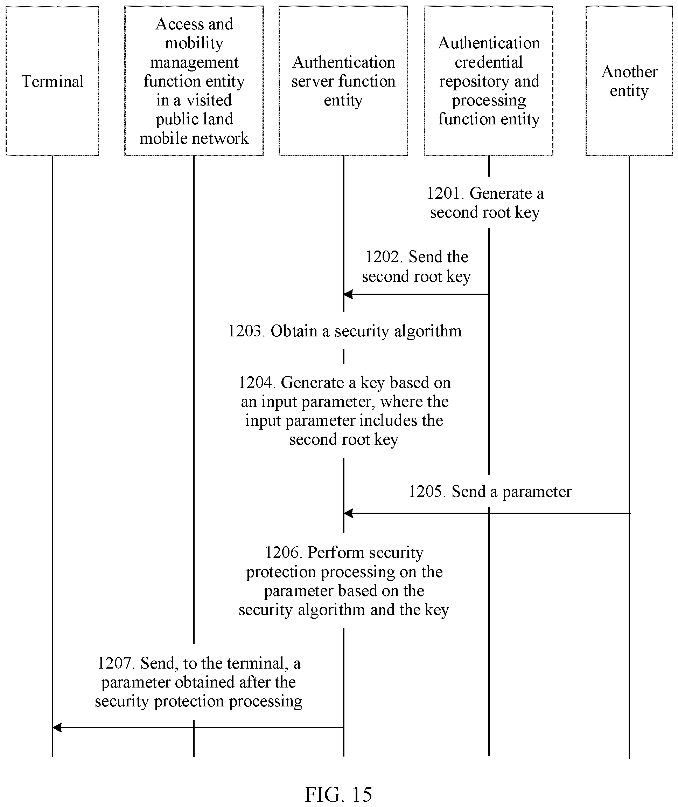

In this embodiment, the AUSF entity decrypts the random number by using the private key that is of the HPLMN and that is corresponding to the public key. The random number is a random number that is received by the AUSF entity from the V-AMF entity and that is encrypted by using the public key of the HPLMN. The AUSF entity generates the key based on the decrypted random number and the first root key. The first root key is generated by the ARPF entity in the HPLMN in the security authentication process between the terminal and the V-AMF entity. Therefore, a manner in which the AUSF entity generates the key is provided. Because the random number and the first root key are used to generate the key, and the random number sent by the V-AMF entity to the AUSF entity is encrypted, a VPLMN cannot learn of real information of the random number. Further, after the AUSF entity in the HPLMN generates the key by using the random number and the first root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn the random number used to perform security protection processing on the parameter, the parameter is not intercepted or modified by the entity in the VPLMN, thereby improving security of the parameter sent by the HPLMN to the terminal during the transmission. FIG. 15 is a schematic communication diagram of even still another parameter protection method according to an embodiment of this application. As shown in FIG. 15, the method is specifically as follows.

1201. An ARPF entity in an HPLMN generates a second root key, where the second root key is different from a first root key generated by the ARPF entity in a security authentication process between a terminal and a V-AMF entity.

In an example, the terminal registration procedure shown in FIG. 8 may be performed before any step before step 1006. Further, it may be learned from step 506 in FIG. 8 that when FIG. 8 is performed, the security authentication process between the terminal and the V-AMF entity may be completed, and then the AUSF entity obtains the Kasme^{∗} in the AV. The Kasme^{∗} in the AV is referred to as the first root key.

In the foregoing process, the ARPF entity may automatically generate a second root key, and the second root key is not the first root key. For example, the first root key is generated based on an integrity key (integrity key, IK), a confidentiality key (confidentiality key, CK), and a VPLMN-ID. The second root key is generated based on the IK, the CK, and an HPLMN-ID.

1202. The ARPF entity sends the second root key to an AUSF entity in the HPLMN.

In an example, the ARPF entity sends the generated second root key to the AUSF entity.

For example, the second key may be included in an AV, and then the ARPF entity sends the AV to the AUSF entity, so that the AUSF entity obtains the second root key. Alternatively, the second key is not included in an AV, and the ARPF entity sends the AV and the second root key to the AUSF entity, so that the AUSF entity obtains the second root key.

1203. The AUSF entity in the HPLMN obtains a security algorithm.

In an example, this step may be implemented by performing step 301 in FIG. 6, or performing step 601 and step 602 in FIG. 9, or performing step 801 in FIG. 11.

1204. The AUSF entity generates a key based on an input parameter, where the input parameter includes the second root key.

In an example, in this implementation, the AUSF entity generates a key HPLMN-Key based on the second root key.

In an optional implementation, the input parameter further includes at least one of the following: an identifier of another entity, an identifier of the security algorithm, and a random number generated by the AUSF entity.

In an example, the AUSF entity may generate, based on an identifier of another entity that needs to send a parameter to the terminal and the second root key, a key corresponding to the another entity that needs to send the parameter to the terminal. For example, if the another entity is a UDM entity, the UDM entity may send an identifier of the UDM entity to the AUSF entity. The AUSF entity generates, based on the identifier of the UDM entity and the second root key, a key corresponding to the UDM entity. For another example, if the another entity is an H-PCF entity, the H-PCF entity may send an identifier of the H-PCF entity to the AUSF entity. The AUSF entity generates, based on the identifier of the H-PCF entity and the second root key, a key corresponding to the H-PCF entity.

Alternatively, the AUSF entity may perform key derivation on the second root key by using the obtained security algorithm, to obtain the key.

Alternatively, the AUSF entity may perform key derivation on the identifier of the another entity and the second root key by using the obtained security algorithm, to obtain the key.

Optionally, the AUSF entity obtains a final key between the HPLMN and the terminal based on the input parameter by using a KDF function. This is implemented in the following manners:
Manner 1: The AUSF entity performs key derivation on the second root key by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 2: The AUSF entity performs key derivation on the second root key and the identifier of the another entity by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 3: The AUSF entity performs key derivation on the second root key by using the KDF function, to obtain a key 1, and the AUSF entity performs key derivation on the key 1, the identifier of the another entity, and the identifier of the security algorithm by using the KDF function, to obtain a key 2. The key 2 is the final secure key between the HPLMN and the terminal.
Manner 4: The AUSF entity performs key derivation on the second root key and the identifier of the security algorithm by using the KDF function, to obtain a key 1. The key 1 is the final secure key between the HPLMN and the terminal.
Manner 5: The AUSF entity performs key derivation on the second root key and the identifier of the another entity by using the KDF function, to obtain a key 1. The key 1 is the final secure key between the HPLMN and the terminal.
Manner 6: The AUSF entity performs key derivation on the second root key, the identifier of the another entity, and the identifier of the security algorithm by using the KDF function, to obtain a key 1. The key 1 is the final secure key between the HPLMN and the terminal.
Manner 7: The AUSF entity performs key derivation on the second root key by using the KDF function, to obtain a key 1. The key 1 is the final secure key between the HPLMN and the terminal. Optionally, for the foregoing manner 1 to manner 7, the random number generated by the AUSF entity may alternatively be used as the input parameter for generating the key 1.

Because the security algorithm includes an encryption algorithm and/or an integrity protection algorithm, the identifier of the security algorithm is an identifier of the encryption algorithm and/or an identifier of the integrity protection algorithm. Therefore, when the identifier of the security algorithm is used as an input, when the security algorithm includes the encryption algorithm, one of the foregoing seven manners needs to be performed once to obtain an encryption key; when the security algorithm includes the integrity protection algorithm, one of the foregoing seven manners needs to be performed once to obtain an integrity protection key; or when the security algorithm includes the encryption algorithm and the integrity protection algorithm, one of the foregoing seven manners needs to be performed once to obtain an encryption key, and one of the foregoing seven manners needs to be performed once to obtain a key.

1205. Another entity in the HPLMN sends a parameter to the AUSF entity, where the another entity is an entity that needs to send the parameter to the terminal.

In an example, for this step, refer to step 102 in FIG. 4. Details are not described again.

1206. The AUSF entity performs security protection processing on the parameter based on the security algorithm and the key.

In an example, for this step, refer to step 103 in FIG. 4. Details are not described again.

1207. The AUSF entity sends, to the terminal, a parameter obtained by the security protection processing.

In an example, for this step, refer to step 104 in FIG. 4. Details are not described again.

In this embodiment, the ARPF entity in the HPLMN generates the second root key. The second root key is different from the first root key generated by the ARPF entity in the security authentication process between the terminal and the V-AMF entity. The ARPF entity sends the second root key to the AUSF entity in the HPLMN. The AUSF entity generates the key based on the second root key. Therefore, another manner in which the AUSF entity generates the key is provided. Because the second root key different from the first root key is used to generate the key, a VPLMN cannot learn of real information of the second root key. Further, after the AUSF entity in the HPLMN generates the key by using the second root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn of the second root key used to perform security protection processing on the parameter, the parameter is not intercepted or modified by the entity in the VPLMN, thereby improving security of the parameter sent by the HPLMN to the terminal during the transmission.

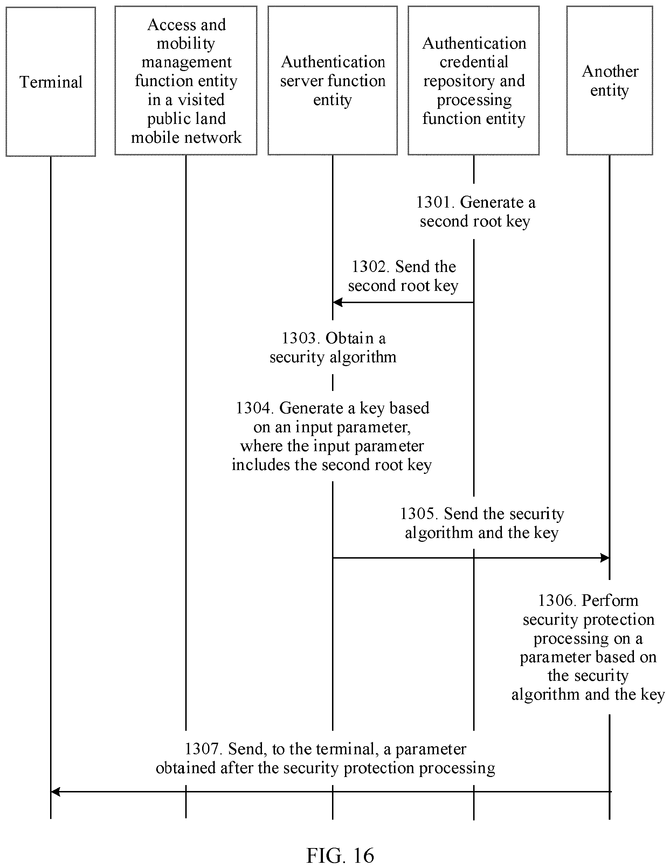

FIG. 16 is a schematic communication diagram of an even still further parameter protection method according to an embodiment of this application. As shown in FIG. 16, the method is specifically as follows.

1301. An ARPF entity in an HPLMN generates a second root key, where the second root key is different from a first root key generated by the ARPF entity in a security authentication process between a terminal and a V-AMF entity.

In an example, for this step, refer to step 1201 in FIG. 15. Details are not described again.

1302. The ARPF entity sends the second root key to an AUSF entity in the HPLMN

In an example, for this step, refer to step 1202 in FIG. 15. Details are not described again.

1303. The AUSF entity in the HPLMN obtains a security algorithm.

In an example, this step may be implemented by performing step 401 in FIG. 7, or performing step 701 and step 702 in FIG. 10, or performing step 901 in FIG. 12.

1304. The AUSF entity generates a key based on an input parameter, where the input parameter includes the second root key.

In an optional implementation, the input parameter further includes one or both of the following: an identifier of another entity and an identifier of the security algorithm.

In an example, for this step, refer to step 1204 in FIG. 15. Details are not described again.

1305. The AUSF entity sends the security algorithm and the key to another entity in the HPLMN, where the another entity is an entity that needs to send a parameter to the terminal.

In an example, for this step, refer to step 202 in FIG. 5. Details are not described again.

1306. The another entity performs security protection processing on the parameter based on the security algorithm and the key.

In an example, for this step, refer to step 203 in FIG. 5. Details are not described again.

1307. The another entity sends, to the terminal, a parameter obtained by the security protection processing.

In an example, for this step, refer to step 204 in FIG. 5. Details are not described again.

In this embodiment, the ARPF entity in the HPLMN generates the second root key. The second root key is different from the first root key generated by the ARPF entity in the security authentication process between the terminal and the V-AMF entity. The ARPF entity sends the second root key to the AUSF entity in the HPLMN. The AUSF entity generates the key based on the second root key. Therefore, another manner in which the AUSF entity generates the key is provided. Because the second root key different from the first root key is used to generate the key, a VPLMN cannot learn of real information of the second root key. Further, after the AUSF entity in the HPLMN generates the key by using the second root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn of the second root key used to perform security protection processing on the parameter, the parameter is not intercepted or modified by the entity in the VPLMN, thereby improving security of the parameter sent by the HPLMN to the terminal during the transmission.

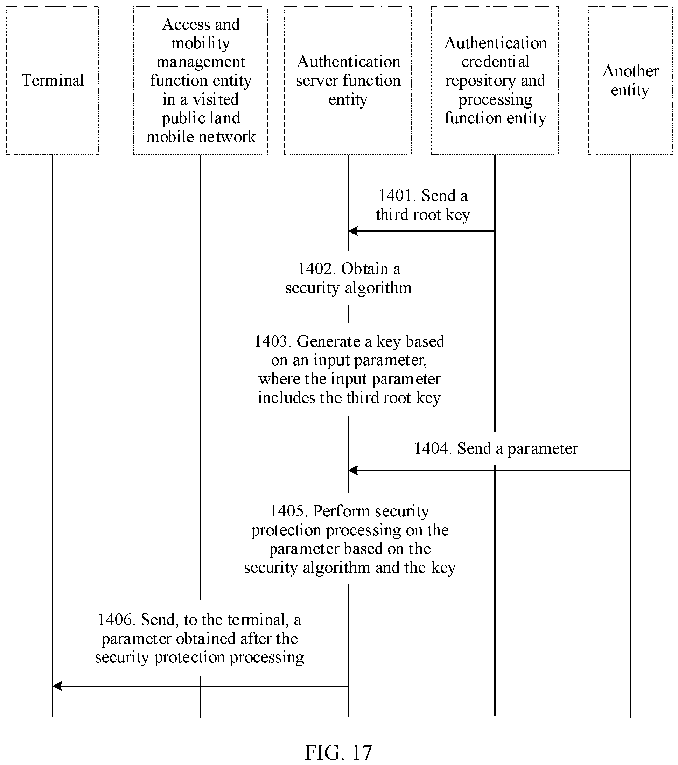

FIG. 17 is a schematic communication diagram of even yet another parameter protection method according to an embodiment of this application. As shown in FIG. 17, the method is specifically as follows.

1401. An ARPF entity in an HPLMN sends a third root key to an AUSF entity in the HPLMN, where the third root key is generated by the ARPF entity in a security authentication process between a terminal and an H-AMF entity.

In an example, after the terminal enters the HPLMN, the terminal may perform the security authentication process with the H-AMF entity, so that the ARPF entity may generate the third root key in the security authentication process. Therefore, it may be learned that the third root key exists in the HPLMN. For example, the third root key is a Kasme^{∗} in an AV.

1402. The AUSF entity in the HPLMN obtains a security algorithm.

In an example, this step may be implemented by performing step 301 in FIG. 6, or performing step 601 and step 602 in FIG. 9, or performing step 801 in FIG. 11.

1403. The AUSF entity generates a key based on an input parameter, where the input parameter includes the third root key.

In an example, in this implementation, the AUSF entity generates a key HPLMN-Key based on the third root key.

In an optional implementation, the input parameter further includes at least one of the following: an identifier of another entity, an identifier of the security algorithm, and a random number generated by the AUSF entity.

In an example, the AUSF entity may generate, based on an identifier of another entity that needs to send a parameter to the terminal and the third root key, a key corresponding to the another entity that needs to send the parameter to the terminal. For example, if the another entity is a UDM entity, the UDM entity may send an identifier of the UDM entity to the AUSF entity. The AUSF entity generates, based on the identifier of the UDM entity and the third root key, a key corresponding to the UDM entity. For another example, if the another entity is an H-PCF entity, the H-PCF entity may send an identifier of the H-PCF entity to the AUSF entity. The AUSF entity generates, based on the identifier of the H-PCF entity and the third root key, a key corresponding to the H-PCF entity.

Alternatively, the AUSF entity may perform key derivation on the third root key by using the obtained security algorithm, to obtain the key.

Alternatively, the AUSF entity may perform key derivation on the identifier of the another entity and the third root key by using the obtained security algorithm, to obtain the key.

Optionally, the AUSF entity obtains a final key between the HPLMN and the terminal based on the input parameter by using a KDF function. This is implemented in the following manners:
Manner 1: The AUSF entity performs key derivation on the third root key by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 2: The AUSF entity performs key derivation on the third root key and the identifier of the another entity by using the KDF function, to obtain a key 1, and the AUSF entity performs key derivation on the key 1 and the identifier of the security algorithm by using the KDF function, to obtain a key 2. The key 2 is the final secure key between the HPLMN and the terminal.
Manner 3: The AUSF entity performs key derivation on the third root key by using the KDF function, to obtain a key 1, and the AUSF entity performs key derivation on the key 1, the identifier of the another entity, and the identifier of the security algorithm by using the KDF function, to obtain a key 2. The key 2 is the final secure key between the HPLMN. and the terminal.
Manner 4: The AUSF entity performs key derivation on the third root key and the identifier of the security algorithm by using the KDF function, to obtain a key 1. The key 1 is the final secure key between the HPLMN and the terminal.
Manner 5: The AUSF entity performs key derivation on the third root key and the identifier of the another entity by using the KDF function, to obtain a key 1. The key 1 is the final secure key between the HPLMN and the terminal.
Manner 6: The AUSF entity performs key derivation on the third root key, the identifier of the another entity, and the identifier of the security algorithm by using the KDF function, to obtain a key 1. The key 1 is the final secure key between the HPLMN and the terminal.
Manner 7: The AUSF entity performs key derivation on the third root key by using the KDF function, to obtain a key 1. The key 1 is the final secure key between the HPLMN and the terminal. Optionally, for the foregoing manner 1 to manner 7, the random number generated by the AUSF entity may alternatively be used as the input parameter for generating the key 1.

Because the security algorithm includes an encryption algorithm and/or an integrity protection algorithm, the identifier of the security algorithm is an identifier of the encryption algorithm and/or an identifier of the integrity protection algorithm. Therefore, when the identifier of the security algorithm is used as an input, when the security algorithm includes the encryption algorithm, one of the foregoing seven manners needs to be performed once to obtain an encryption key; when the security algorithm includes the integrity protection algorithm, one of the foregoing seven manners needs to be performed once to obtain an integrity protection key; or when the security algorithm includes the encryption algorithm and the integrity protection algorithm, one of the foregoing seven manners needs to be performed once to obtain an encryption key, and one of the foregoing seven manners needs to be performed once to obtain a key.

1404. Another entity in the HPLMN sends a parameter to the AUSF entity, where the another entity is an entity that needs to send the parameter to the terminal.

In an example, for this step, refer to step 102 in FIG. 4. Details are not described again.

1405. The AUSF entity performs security protection processing on the parameter based on the security algorithm and the key.

In an example, for this step, refer to step 103 in FIG. 4. Details are not described again.

1406. The AUSF entity sends, to the terminal, a parameter obtained by the security protection processing.

In an example, for this step, refer to step 104 in FIG. 4. Details are not described again.

In this embodiment, the ARPF entity in the HPLMN sends the third root key to the AUSF entity in the HPLMN. The third root key is generated by the ARPF entity in the security authentication process between the terminal and the H-AMF entity. Therefore, another manner in which the AUSF entity generates the key is provided. Because the third root key generated in the security authentication process between the terminal and the H-AMF entity is used to generate the key, a VPLMN cannot learn of real information of the third root key. Further, after the AUSF entity in the HPLMN generates the key by using the third root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn of the third root key used to perform security protection processing on the parameter, the parameter is not intercepted or modified by the entity in the VPLMN, thereby improving security of the parameter sent by the HPLMN to the terminal during the transmission.

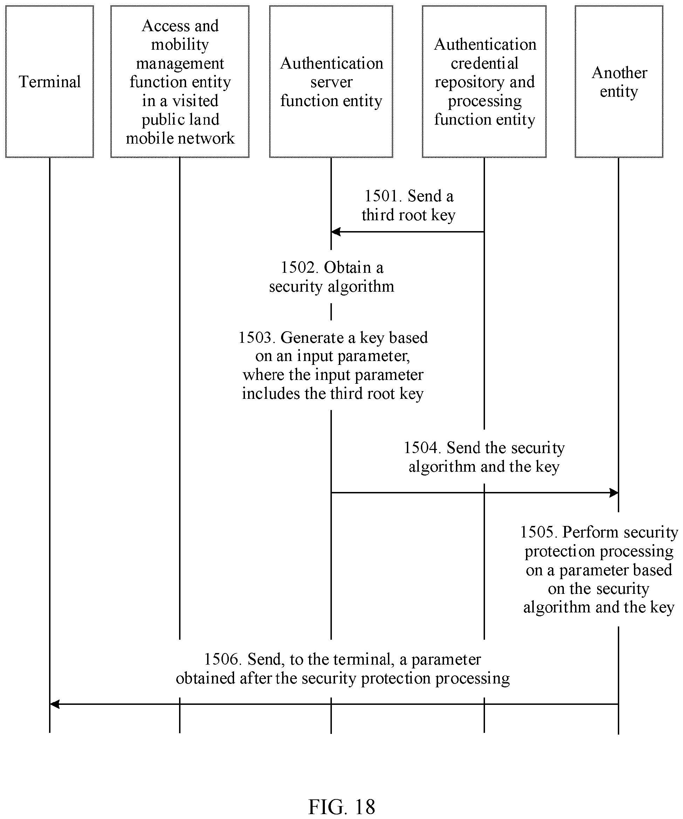

FIG. 18 is a schematic communication diagram of an even yet further parameter protection method according to an embodiment of this application. As shown in FIG. 18, the method is specifically as follows.

1501. An ARPF entity in an HPLMN sends a third root key to an AUSF entity in the HPLMN, where the third root key is generated by the ARPF entity in a security authentication process between a terminal and an H-AMF entity.

In an example, for this step, refer to step 1401 in FIG. 17. Details are not described again.

1502. The AUSF entity in the HPLMN obtains a security algorithm.

In an example, this step may be implemented by performing step 401 in FIG. 7, or performing step 701 and step 702 in FIG. 10, or performing step 901 in FIG. 12.

1503. The AUSF entity generates a key based on an input parameter, where the input parameter includes the third root key.

In an example, in this implementation, the AUSF entity generates a key HPLMN-Key based on the third root key.

In an optional implementation, the input parameter further includes one or both of the following: an identifier of another entity and an identifier of the security algorithm.

In an example, for this step, refer to step 1403 in FIG. 17. Details are not described again.

1504. The AUSF entity sends the security algorithm and the key to another entity in the HPLMN, where the another entity is an entity that needs to send a parameter to the terminal.

In an example, for this step, refer to step 202 in FIG. 5. Details are not described again.

1505. The another entity performs security protection processing on the parameter based on the security algorithm and the key.

In an example, for this step, refer to step 203 in FIG. 5. Details are not described again.

1506. The another entity sends, to the terminal, a parameter obtained by the security protection processing.

In an example, for this step, refer to step 204 in FIG. 5. Details are not described again.

In this embodiment, the ARPF entity in the HPLMN sends the third root key to the AUSF entity in the HPLMN. The third root key is generated by the ARPF entity in the security authentication process between the terminal and the H-AMF entity. Therefore, another manner in which the AUSF entity generates the key is provided. Because the third root key generated in the security authentication process between the terminal and the H-AMF entity is used to generate the key, a VPLMN cannot learn of real information of the third root key. Further, after the AUSF entity in the HPLMN generates the key by using the third root key, the AUSF entity may perform, by using the generated key, security protection processing on the parameter to be sent to the terminal. Therefore, in a process in which the parameter is forwarded to the terminal by using an entity in the VPLMN, because the entity in the VPLMN cannot learn of the third root key used to perform security protection processing on the parameter, the parameter is not intercepted or modified by the entity in the VPLMN, thereby improving security of the parameter sent by the HPLMN to the terminal during the transmission.

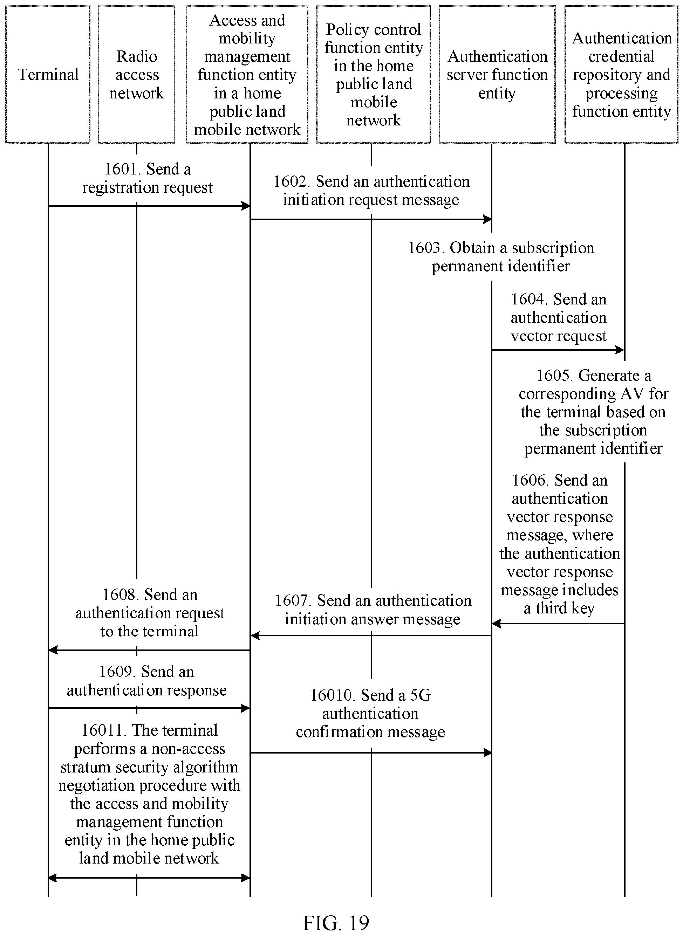

In an optional implementation, FIG. 19 is a schematic communication diagram of sending the third root key by the ARPF entity to the AUSF entity according to an embodiment of this application. Based on FIG. 17 or FIG. 18, as shown in FIG. 19, for step 1401 or step 1501, refer to the following steps.

1601. The terminal sends a registration request to the H-AMF entity.

In an example, the registration request represents that the terminal initiates a registration procedure. The registration procedure may be initial registration, mobility registration, or periodic registration. 1602. The H-AMF entity sends an AIR message to the AUSF entity in the HPLMN

In an example, a subscriber identifier of the terminal is carried in a current AIR message. The subscriber identifier of the terminal may be an SUPI, or the subscriber identifier of the terminal is an anonymous SUPI. The anonymous SUPI is an SUCI.

1603. The AUSF entity obtains an SUPI.

In an example, if the SUPI is carried in the AIR message received by the AUSF entity, the AUSF entity may directly obtain the SUPI in the AIR message. If the SUCI is carried in the AIR message received by the AUSF entity, the AUSF entity decrypts the SUCI by using a private key, to obtain the SUPI.

1604. The AUSF entity sends an AV request to the ARPF entity, where the AV request carries the SUPI.

1605. The ARPF entity generates a corresponding AV for the terminal based on the SUPI.

1606. The ARPF entity sends an AV response message to the AUSF entity, where the AV response message includes the third root key, and the third root key is generated by the ARPF entity in a security authentication process between the terminal and the H-AMF entity.

In an example, the AV response message includes the AV, the AV includes the third root key Kasme^{∗}, and the AV further includes an XRES^{∗}, a RAND, and an AUTN.

1607. The AUSF entity sends an AIA message to the H-AMF entity, where the AIA message carries the AV or an AV^{∗} generated after the AUSF entity processes the AV.

In an example, the AV^{∗} includes the third root key Kasme^{∗} and an HXRES^{∗}, where a value of the HXRES^{∗} is SHA-256 (XRES^{∗} ∥ RAND).

1608. The H-AMF entity sends an authentication request to the terminal.

1609. The terminal sends an authentication response to the H-AMF entity.

16010. The H-AMF entity sends a 5G-AC message to the AUSF entity.

In an example, step 16010 may be performed or may not be performed.

16011. The terminal performs a NAS security algorithm negotiation procedure with the H-AMF entity.

In an example, the security authentication process between the terminal and the H-AMF entity is completed by performing step 1601 to step 16010. Further, in step 1606, the ARPF entity sends, to the AUSF entity, the third root key generated in the security authentication process between the terminal and the H-AMF entity.

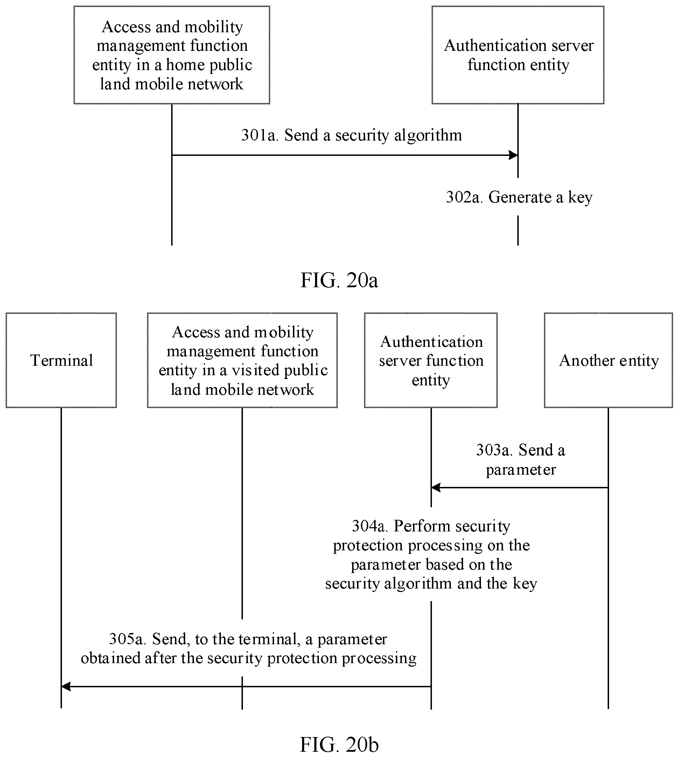

FIG. 20a is a schematic communication diagram 1 of still even another parameter protection method according to an embodiment of this application, and FIG. 20b is a schematic communication diagram 2 of still even another parameter protection method according to an embodiment of this application. As shown in FIG. 20a and FIG. 20b, the method is specifically as follows.

301a. An H-AMF entity sends a security algorithm to an AUSF entity in an HPLMN, where the security algorithm is a security algorithm negotiated by a terminal with the H-AMF entity.

In an example, in step 301a, the terminal is located in the HPLMN, and the terminal initiates a registration procedure to the HPLMN. In a registration process of the terminal, the H-AMF entity negotiates with the terminal, to negotiate a security algorithm. Then, the H-AMF entity sends the negotiated security algorithm to the AUSF entity in the HPLMN, so that the AUSF entity obtains the security algorithm used to perform security protection processing on a parameter.

302a. The AUSF entity generates a key, where the key is used to protect transmission of a parameter between the terminal and the HPLMN.

In an example, for this step, refer to step 101 in FIG. 4: Generate a key. Alternatively, for this step, refer to step 1006 in FIG. 13: Generate a key based on an input parameter, where the input parameter includes a decrypted random number and a first root key. Alternatively, for this step, refer to step 1204 in FIG. 15: Generate a key based on an input parameter, where the input parameter includes the second root key. Alternatively, for this step, refer to step 1403 in FIG. 17: Generate a key based on an input parameter, where the input parameter includes the third root key. Details are not described again. A difference between this step and step 302 is that, in step 302a, the terminal is located in the HPLMN

In an optional implementation, if step 302a is replaced with step 1403 in FIG. 17, refer to the steps in FIG. 19.

When steps 301a and 302a are performed, the terminal is located in the HPLMN. Then, the terminal roams to a VPLMN. In this case, step 303a to step 305a are performed. It may be learned that in step 303a to step 305a, the terminal is located in the VPLMN. Refer to FIG. 20b.

303a. Another entity in the HPLMN sends a parameter to the AUSF entity, where the another entity is an entity that needs to send the parameter to the terminal.

In an example, for this step, refer to step 102 in FIG. 4. Details are not described again.

304a. The AUSF entity performs security protection processing on the parameter based on the security algorithm and the key.

In an example, for this step, refer to step 103 in FIG. 4. Details are not described again.

305a. The AUSF entity sends, to the terminal, a parameter obtained by the security protection processing.

In an example, for this step, refer to step 104 in FIG. 4. Details are not described again.

In this embodiment, the security algorithm used by the AUSF entity is negotiated by the terminal with the HPLMN when the terminal is located in the HPLMN. The key used by the AUSF entity is generated by the AUSF entity when the terminal is located in the HPLMN. Therefore, the VPLMN cannot learn of the security algorithm and the key. After the AUSF entity performs, by using the security algorithm and the key, security protection processing on the parameter to be sent to the terminal, the another entity in the HPLMN sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminal during the transmission.

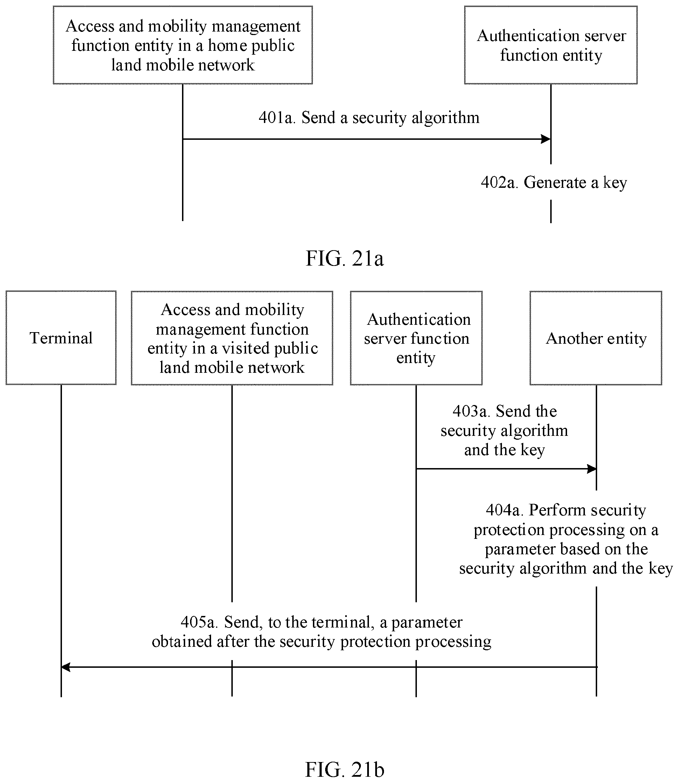

FIG. 21a is a schematic communication diagram 1 of a still even further parameter protection method according to an embodiment of this application, and FIG. 21b is a schematic communication diagram 2 of a still even further parameter protection method according to an embodiment of this application. As shown in FIG. 21a and FIG. 21b, the method is specifically as follows.

401a. An H-AMF entity sends a security algorithm to an AUSF entity in an HPLMN, where the security algorithm is a security algorithm negotiated by a terminal with the H-AMF entity.

In an example, for this step, refer to step 301a in FIG. 20a. Details are not described again.

402a. The AUSF entity generates a key, where the key is used to protect transmission of a parameter between the terminal and the HPLMN

In an example, for this step, refer to step 201 in FIG. 5: Generate a key. Alternatively, for this step, refer to step 1106 in FIG. 14: Generate a key based on an input parameter, where the input parameter includes a decrypted random number and a first root key. Alternatively, for this step, refer to step 1304 in FIG. 16: Generate a key based on an input parameter, where the input parameter includes the second root key. Alternatively, for this step, refer to step 1503 in FIG. 18: Generate a key based on an input parameter, where the input parameter includes the third root key. Details are not described again.

In an optional implementation, if step 402a performs step 1503 in FIG. 18, refer to the steps in FIG. 19.

When steps 401a and 402a are performed, the terminal is located in the HPLMN. Then, the terminal roams to a VPLMN. In this case, step 403a to step 405a are performed. It may be learned that in step 403a to step 405a, the terminal is located in the VPLMN. Refer to FIG. 21b.

403a. The AUSF entity sends the security algorithm and the key to another entity in the HPLMN, where the another entity is an entity that needs to send a parameter to the terminal.

In an example, for this step, refer to step 202 in FIG. 5. Details are not described again.

404a. The another entity performs security protection processing on the parameter based on the security algorithm and the key.

In an example, for this step, refer to step 203 in FIG. 5. Details are not described again.

405a. The another entity sends, to the terminal, a parameter obtained by the security protection processing.

In an example, for this step, refer to step 204 in FIG. 5. Details are not described again.

In this embodiment, the security algorithm used by the another entity in the HPLMN is negotiated by the terminal with the HPLMN when the terminal is located in the HPLMN. The key used by the another entity in the HPLMN is generated by the AUSF entity when the terminal is located in the HPLMN. Therefore, the VPLMN cannot learn of the security algorithm and the key. After the another entity in the HPLMN performs, by using the security algorithm and the key, security protection processing on the parameter to be sent to the terminal, the another entity sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminalduring the transmission.

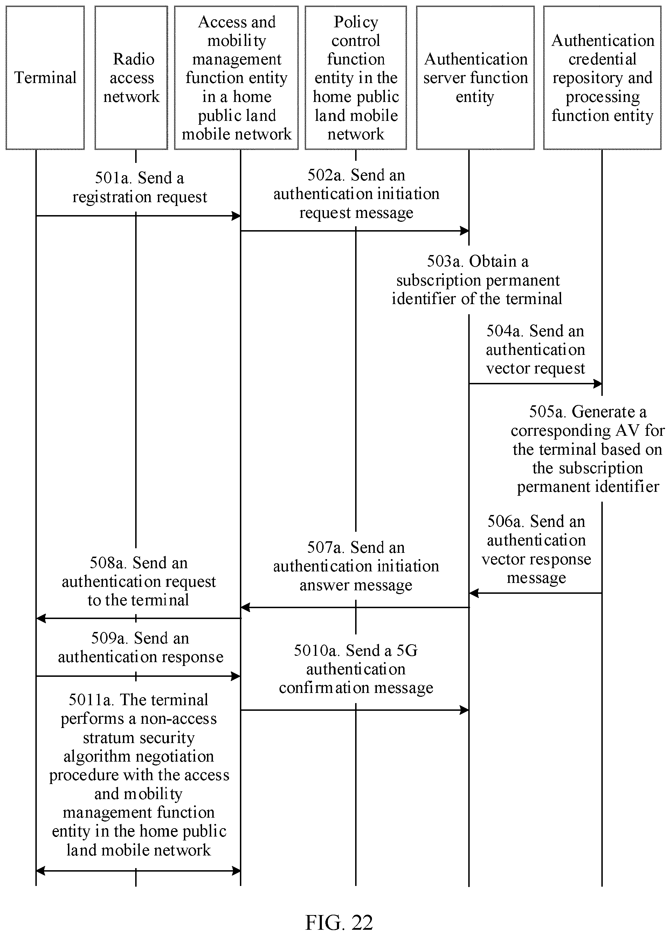

In an optional implementation, FIG. 22 is a schematic communication diagram of a terminal registration procedure according to an embodiment of this application. Based on the embodiment shown in FIG. 20a or FIG. 21a, steps in FIG. 22 may be performed before step 301a or step 401a is performed.

501a. The terminal sends a registration request to the H-AMF entity.

In an example, in an execution process of the steps in FIG. 22, the terminal is located in the HPLMN. The registration request represents that the terminal initiates a registration procedure. The registration procedure may be initial registration, mobility registration, or periodic registration. 502a. The H-AMF entity sends an AIR message to the AUSF entity in the HPLMN

In an example, a subscriber identifier of the terminal is carried in the AIR message. The subscriber identifier of the terminal may be an SUPI, or the subscriber identifier of the terminal is an anonymous SUPI. The anonymous SUPI is an SUCI.

503a. The AUSF entity obtains an SUPI of the terminal.

In an example, if the SUPI is carried in the AIR message received by the AUSF entity, the AUSF entity may directly obtain the SUPI in the AIR message. If the SUCI is carried in the AIR message received by the AUSF entity, the AUSF entity decrypts the SUCI by using a private key, to obtain the SUPI.

504a. The AUSF entity sends an authentication vector AV request to the ARPF entity, where the AV request carries the SUPI.

505a. The ARPF entity generates a corresponding AV for the terminal based on the SUPI.

506a. The ARPF entity sends an AV response message to the AUSF entity, where the AV response message includes one or more AVs.

In an example, the AV includes a key Kasme^{∗}, and the AV further includes an XRES^{∗}, a RAND, and an AUTN.

507a. The AUSF entity sends an AIA message to the H-AMF entity, where the AIA message carries the AV or an AV^{∗} generated after the AUSF entity processes the AV.

In an example, the AV^{∗} includes the key Kasme^{∗} and an HXRES^{∗}, and an SHA is provided. In this case, a value of the HXRES^{∗} is SHA-256 (XRES^{∗} ∥ RAND).

508a. The H-AMF entity sends an authentication request to the terminal.

509a. The terminal sends an authentication response to the H-AMF entity.

5010a. The H-AMF entity sends a 5G-AC message to the AUSF entity.

In an example, step 5010a may be performed or may not be performed.

5011a. The terminal performs a NAS security algorithm negotiation procedure with the H-AMF entity, to negotiate a NAS security algorithm used between the terminal and the H-AMF entity. By performing the foregoing steps, the H-AMF entity may have the security algorithm that is to be sent to the AUSF entity in the HPLMN.

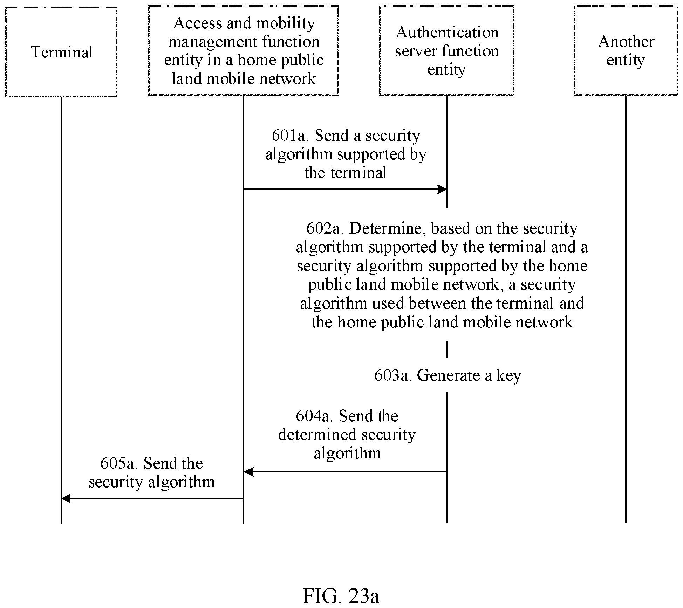

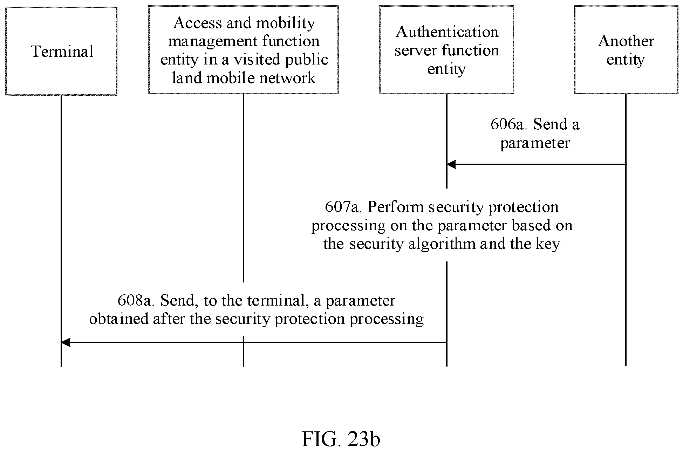

FIG. 23a is a schematic communication diagram 1 of yet even another parameter protection method according to an embodiment of this application, and FIG. 23b is a schematic communication diagram 2 of yet even another parameter protection method according to an embodiment of this application. As shown in FIG. 23a and FIG. 23b, the method is specifically as follows.

601a. An H-AMF entity sends a security algorithm supported by a terminal to an AUSF entity.

In an example, when step 601a is performed, the terminal is located in an HPLMN. The H-AMF entity has the security algorithm supported by the terminal. The H-AMF entity sends the security algorithm supported by the terminal to the AUSF entity. Specifically, the H-AMF entity sends security capability information of the terminal to the AUSF entity. The security capability information includes the security algorithm supported by the terminal, and each algorithm has a priority. In this embodiment, before step 603a, the steps in FIG. 22 may alternatively be performed. Then, the action that an H-AMF entity sends a security algorithm supported by a terminal to an AUSF entity may be performed in step 502a in FIG. 22. Alternatively, the action that an H-AMF entity sends a security algorithm supported by a terminal to an AUSF entity may be performed in step 5010a in FIG. 22. Alternatively, the action that an H-AMF entity sends a security algorithm supported by a terminal to an AUSF entity may be performed by using a separate message. Alternatively, in an optional implementation, step 601a may be: The H-AMF entity sends indication information to the AUSF entity, where the indication information indicates the security algorithm supported by the terminal; and then, the AUSF entity determines, based on the indication information, the security algorithm supported by the terminal.

602a. The AUSF entity determines, based on the security algorithm supported by the terminal and a security algorithm supported by an HPLMN, a security algorithm used between the terminal and the HPLMN.

In an example, for this step, refer to step 602 in FIG. 9. Details are not described again.

603a. The AUSF entity generates a key, where the key is used to protect transmission of a parameter between the terminal and the HPLMN.

In an example, for this step, refer to step 603 in FIG. 9. Alternatively, for this step, refer to step 1006 in FIG. 13: Generate a key based on an input parameter, where the input parameter includes a decrypted random number and a first root key. Alternatively, for this step, refer to step 1204 in FIG. 15: Generate a key based on an input parameter, where the input parameter includes the second root key. Alternatively, for this step, refer to step 1403 in FIG. 17: Generate a key based on an input parameter, where the input parameter includes the third root key. Details are not described again.

In an optional implementation, if step 602a performs step 1403 in FIG. 17, refer to the steps in FIG. 19.

604a. The AUSF entity sends the determined security algorithm to the H-AMF entity.

605a. The H-AMF entity sends the security algorithm to the terminal.

When step 601a to step 605a are performed, the terminal is located in the HPLMN. Then, the terminal roams to a VPLMN. In this case, step 606a to step 608a are performed. It may be learned that in step 606a to step 608a, the terminal is located in the VPLMN. Refer to FIG. 23b.

606a. Another entity in the HPLMN. sends the parameter to the AUSF entity, where the another entity is an entity that needs to send the parameter to the terminal.

In an example, for this step, refer to step 606 in FIG. 9. Details are not described again.

607a. The AUSF entity performs security protection processing on the parameter based on the security algorithm and the key.

In an example, for this step, refer to step 607 in FIG. 9. Details are not described again.

608a. The AUSF entity sends, to the terminal, a parameter obtained by the security protection processing.

In an example, for this step, refer to step 608 in FIG. 9. Details are not described again.

In this embodiment, when the terminal is located in the HPLMN, the terminal sends, to the AUSF entity by using the H-AMF entity, the security algorithm supported by the terminal. The AUSF entity determines the security algorithm used between the terminal and the HPLMN, and the AUSF entity generates the key. Then, when the terminal roams to the VPLMN, the VPLMN cannot learn of the security algorithm and the key. After the AUSF entity performs, based on the security algorithm and the key, security protection processing on the parameter to be sent to the terminal, the AUSF entity sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminal during the transmission.

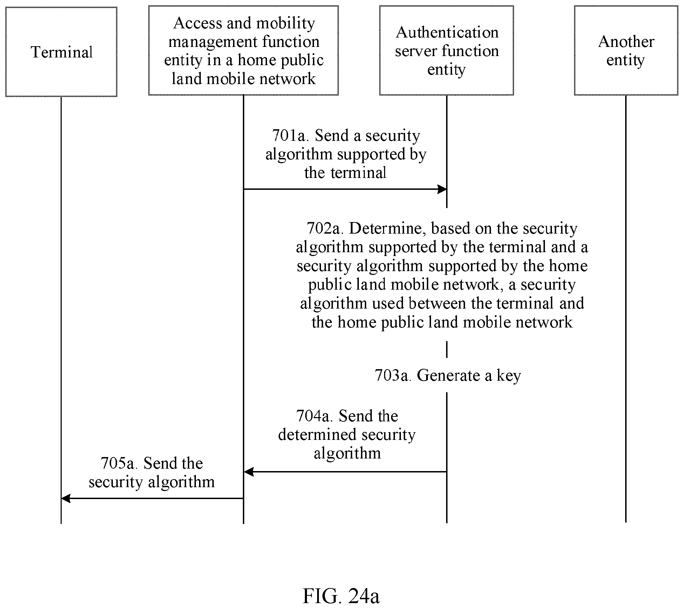

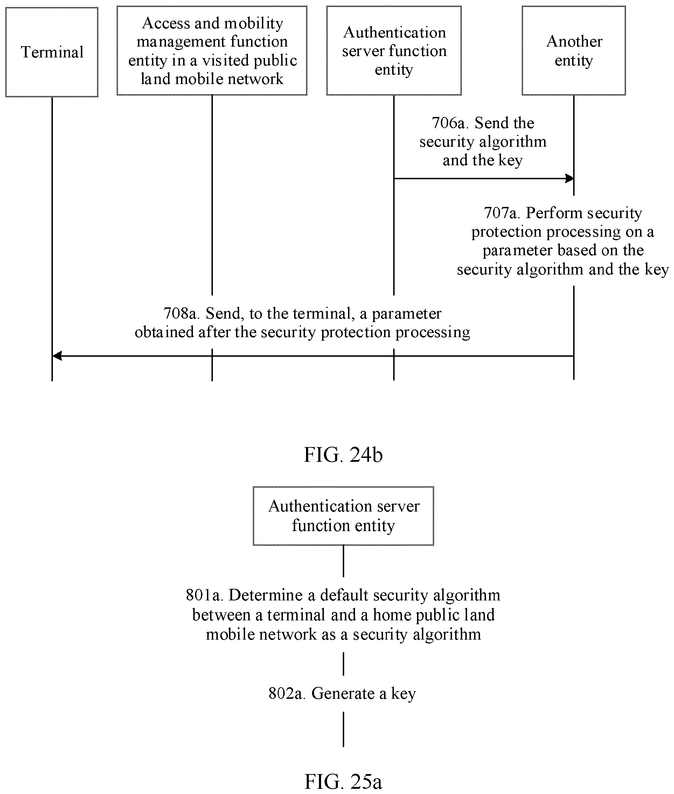

FIG. 24a is a schematic communication diagram 1 of a yet even further parameter protection method according to an embodiment of this application, and FIG. 24b is a schematic communication diagram 2 of a yet even further parameter protection method according to an embodiment of this application. As shown in FIG. 24a and FIG. 24b, the method is specifically as follows.

701a. An H-AMF entity sends a security algorithm supported by a terminal to an AUSF entity.

In an example, when step 701a is performed, the terminal is located in an HPLMN. For this step, refer to step 601a in FIG. 23a. Details are not described again.

702a. The AUSF entity determines, based on the security algorithm supported by the terminal and a security algorithm supported by an HPLMN, a security algorithm used between the terminal and the HPLMN

In an example, for this step, refer to step 702 in FIG. 10. Details are not described again.

703a. The AUSF entity generates a key, where the key is used to protect transmission of a parameter between the terminal and the HPLMN

In an example, for this step, refer to step 703 in FIG. 10. Alternatively, for this step, refer to step 1106 in FIG. 14: Generate a key based on an input parameter, where the input parameter includes a decrypted random number and a first root key. Alternatively, for this step, refer to step 1304 in FIG. 16: Generate a key based on an input parameter, where the input parameter includes the second root key. Alternatively, for this step, refer to step 1503 in FIG. 18: Generate a key based on an input parameter, where the input parameter includes the third root key. Details are not described again.

In an optional implementation, if step 702a performs step 1503 in FIG. 18, refer to the steps in FIG. 19.

704a. The AUSF entity sends the determined security algorithm to the H-AMF entity.

705a. The H-AMF entity sends the security algorithm to the terminal.

When step 701a to step 705a are performed, the terminal is located in the HPLMN. Then, the terminal roams to a VPLMN. In this case, step 706a to step 708a are performed. It may be learned that in step 706a to step 708a, the terminal is located in the VPLMN. Refer to FIG. 24b.

706a. The AUSF entity sends the security algorithm and the key to another entity in the HPLMN, where the another entity is an entity that needs to send the parameter to the terminal.

In an example, for this step, refer to step 706 in FIG. 10. Details are not described again.

707a. The another entity performs security protection processing on the parameter based on the security algorithm and the key.

In an example, for this step, refer to step 707 in FIG. 10. Details are not described again.

708a. The another entity sends, to the terminal, a parameter obtained by the security protection processing.

In an example, for this step, refer to step 708 in FIG. 10. Details are not described again.

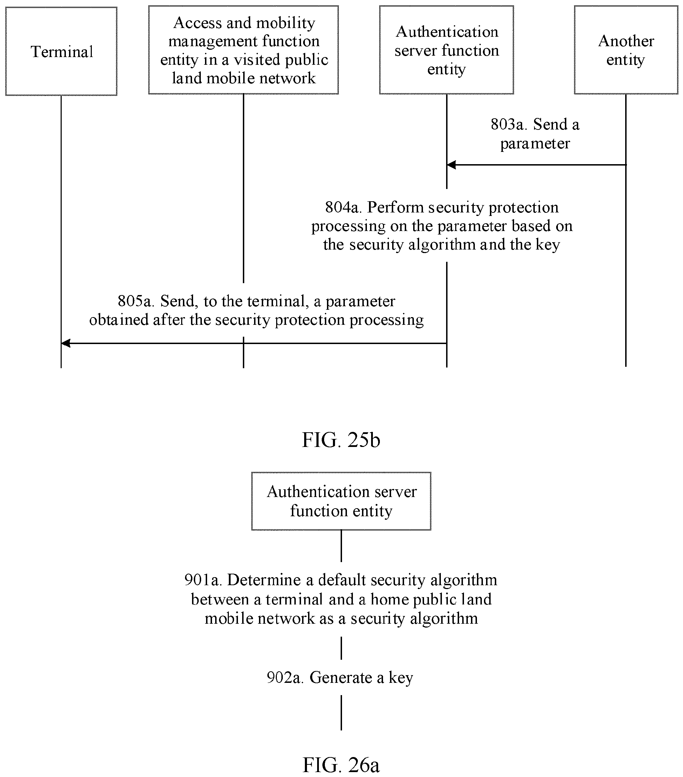

In this embodiment, when the terminal is located in the HPLMN, the terminal sends, to the AUSF entity by using the H-AMF entity, the security algorithm supported by the terminal. The AUSF entity determines the security algorithm used between the terminal and the HPLMN, and the AUSF entity generates the key. Then, when the terminal roams to the VPLMN, the VPLMN cannot learn of the security algorithm and the key. After the another entity in the HPLMN performs, based on the security algorithm and the key, security protection processing on the parameter to be sent to the terminal, the another entity sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminal during the transmission. FIG. 25a is a schematic communication diagram 1 of still yet even another parameter protection method according to an embodiment of this application, and FIG. 25b is a schematic communication diagram 2 of still yet even another parameter protection method according to an embodiment of this application. As shown in FIG. 25a and FIG. 25b, the method is specifically as follows.

801a. An AUSF entity determines a default security algorithm between a terminal and an HPLMN as a security algorithm.

In an example, when step 801a is performed, the terminal is located in the HPLMN. For this step, refer to step 801 in FIG. 11. Details are not described again.

802a. The AUSF entity generates a key.

In an example, for this step, refer to step 802 in FIG. 11. Alternatively, for this step, refer to step 1006 in FIG. 13: Generate a key based on an input parameter, where the input parameter includes a decrypted random number and a first root key. Alternatively, for this step, refer to step 1204 in FIG. 15: Generate a key based on an input parameter, where the input parameter includes the second root key. Alternatively, for this step, refer to step 1403 in FIG. 17: Generate a key based on an input parameter, where the input parameter includes the third root key. Details are not described again.

In an optional implementation, if step 802a performs step 1403 in FIG. 17, refer to the steps in FIG. 19.

When step 801a and step 802a are performed, the terminal is located in the HPLMN. Then, the terminal roams to a VPLMN. In this case, step 803a to step 805a are performed. It may be learned that in step 803a to step 805a, the terminal is located in the VPLMN. Refer to FIG. 25b.

803a. Another entity in the HPLMN sends a parameter to the AUSF entity, where the another entity is an entity that needs to send the parameter to the terminal.

In an example, for this step, refer to step 803 in FIG. 11. Details are not described again.

804a. The AUSF entity performs security protection processing on the parameter based on the security algorithm and the key.

In an example, for this step, refer to step 804 in FIG. 11. Details are not described again.

805 a. The AUSF entity sends, to the terminal, a parameter obtained by the security protection processing.

In an example, for this step, refer to step 805 in FIG. 11. Details are not described again.

In this embodiment, when the terminal is located in the HPLMN, the AUSF entity determines the default security algorithm between the terminal and the HPLMN as the security algorithm, and the AUSF entity generates the key. Then, when the terminal roams to the VPLMN, the VPLMN cannot learn of the security algorithm and the key. After the AUSF entity performs, based on the security algorithm and the key, security protection processing on the parameter to be sent to the terminal, the AUSF entity sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminal during the transmission.

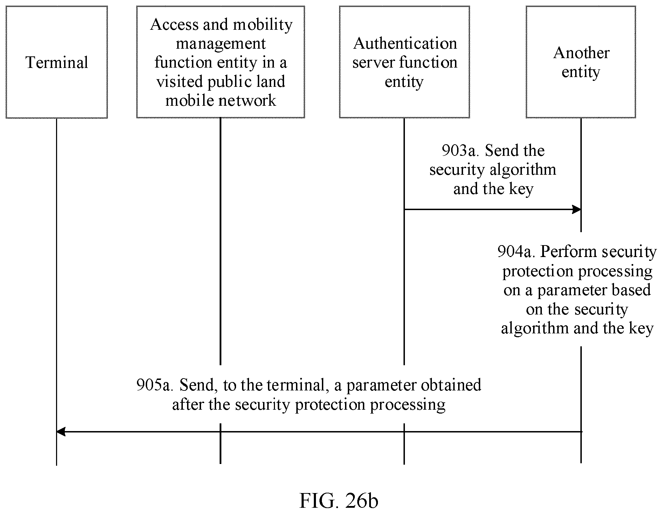

FIG. 26a is a schematic communication diagram 1 of a still yet even further parameter protection method according to an embodiment of this application, and FIG. 26b is a schematic communication diagram 2 of a still yet even further parameter protection method according to an embodiment of this application. As shown in FIG. 26a and FIG. 26b, the method is specifically as follows.

901a. An AUSF entity in an HPLMN determines a default security algorithm between a terminal and the HPLMN as a security algorithm.

In an example, when step 801a is performed, the terminal is located in the HPLMN. For this step, refer to step 901 in FIG. 12. Details are not described again.

902a. The AUSF entity generates a key, where the key is used to protect transmission of a parameter between the terminal and the HPLMN

In an example, for this step, refer to step 902 in FIG. 12. Alternatively, for this step, refer to step 1106 in FIG. 14: Generate a key based on an input parameter, where the input parameter includes a decrypted random number and a first root key. Alternatively, for this step, refer to step 1304 in FIG. 16: Generate a key based on an input parameter, where the input parameter includes the second root key. Alternatively, for this step, refer to step 1503 in FIG. 18: Generate a key based on an input parameter, where the input parameter includes the third root key. Details are not described again.

In an optional implementation, if step 902a performs step 1503 in FIG. 18, refer to the steps in FIG. 19.

When step 901a and step 902a are performed, the terminal is located in the HPLMN. Then, the terminal roams to a VPLMN. In this case, step 903a to step 905a are performed. It may be learned that in step 903a to step 905a, the terminal is located in the VPLMN. Refer to FIG. 26b.

903a. The AUSF entity sends the security algorithm and the key to another entity in the HPLMN, where the another entity is an entity that needs to send the parameter to the terminal.

In an example, for this step, refer to step 903 in FIG. 12. Details are not described again.

904a. The another entity performs security protection processing on the parameter based on the security algorithm and the key.

In an example, for this step, refer to step 904 in FIG. 12. Details are not described again.

905a. The another entity sends, to the terminal, a parameter obtained by the security protection processing.

In an example, for this step, refer to step 905 in FIG. 12. Details are not described again. In this embodiment, when the terminal is located in the HPLMN, the AUSF entity determines the default security algorithm between the terminal and the HPLMN as the security algorithm, and the AUSF entity generates the key. Then, when the terminal roams to the VPLMN, the VPLMN cannot learn of the security algorithm and the key. After the another entity in the HPLMN performs, based on the security algorithm and the key, security protection processing on the parameter to be sent to the terminal, the another entity sends, to the terminal by using an entity in the VPLMN, the parameter obtained by the security protection processing, so that the entity in the VPLMN cannot eavesdrop on or tamper with the parameter obtained by the security protection processing, thereby improving security of the parameter sent by the HPLMN to the terminal during the transmission. In the methods shown in FIG. 4 to FIG. 26b, optionally, a length of a key provided in the methods may be 64 bits (bits), 128 bits, or 256 bits. Optionally, a security algorithm provided in the methods may be SNOW 3G, an advanced encryption standard (advanced encryption standard, AES), a ZUC code algorithm (the ZUC code algorithm, ZUC), or the like.

The foregoing mainly describes, from the perspective of interaction between different network devices, the solutions provided in the embodiments of this application. It may be understood that, to implement the foregoing functions, the AUSF entity and the terminal include corresponding hardware structures and/or software modules for performing the functions. With reference to the units and algorithm steps in the examples described the embodiments disclosed in this application, the embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, function modules of the AUSF entity and the terminal may be divided based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into the modules is merely an example, is merely logical function division, and may be other division during actual implementation.

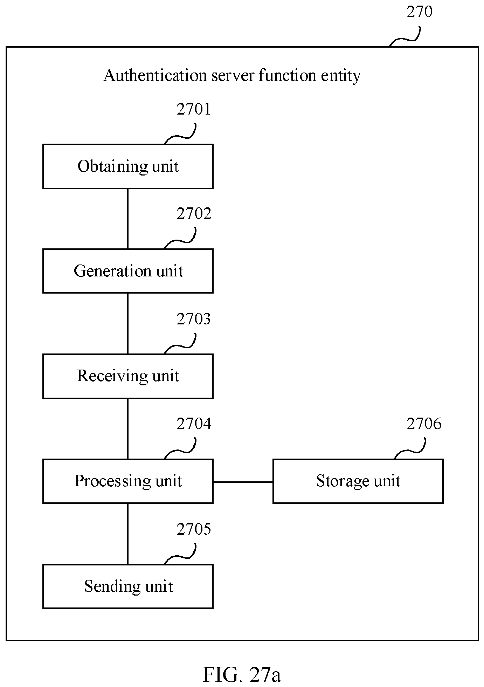

When an integrated module is used, FIG. 27a is a schematic block diagram of an AUSF entity 270 according to an embodiment of this application. The AUSF entity 270 includes an obtaining unit 2701, a generation unit 2702, a receiving unit 2703, and a processing unit 2704. The obtaining unit 2701 is configured to obtain a security algorithm. The generation unit 2702 is configured to generate a key. The key is used to protect transmission of a parameter between a terminal and an HPLMN. For example, the obtaining unit 2701 and the generation unit 2702 are configured to support the AUSF entity 270 in performing step 101 in FIG. 4, steps 301 and 302 in FIG. 6, steps 601 to 603 in FIG. 9, steps 801 and 802 in FIG. 11, steps 1004 to 1006 in FIG. 13, steps 1202 to 1204 in FIG. 15, steps 1401 to 1403 in FIG. 17, steps 301a and 302a in FIG. 20a, steps 601a to 603a in FIG. 23a, steps 801a and 802a in FIG. 25a, and/or another process of the technology described in this application. The receiving unit 2703 is configured to receive the parameter from another entity in the HPLMN. The another entity is an entity that needs to send the parameter to the terminal. For example, the receiving unit 2703 is configured to support the AUSF entity 270 in performing step 102 in FIG. 4, step 303 in FIG. 6, step 606 in FIG. 9, step 803 in FIG. 11, step 1007 in FIG. 13, step 1205 in FIG. 15, step 1404 in FIG. 17, step 303a in FIG. 20b, step 606a in FIG. 23b, step 803a in FIG. 25b, and/or another process of the technology described in this application. The processing unit 2704 is configured to perform security protection processing on the parameter based on the security algorithm and the key. For example, the processing unit 2704 is configured to support the AUSF entity 270 in performing step 103 in FIG. 4, step 304 in FIG. 6, step 607 in FIG. 9, step 804 in FIG. 11, step 1008 in FIG. 13, step 1206 in FIG. 15, step 1405 in FIG. 17, step 304a in FIG. 20b, step 607a in FIG. 23b, step 804a in FIG. 25b, and/or another process of the technology described in this application.

The AUSF entity 270 may further include a sending unit 2705, configured to: after the processing unit performs security protection processing on the parameter based on the security algorithm and the key, send, to the terminal, a parameter obtained by the security protection processing. For example, the sending unit 2705 is configured to support the AUSF entity 270 in performing step 104 in FIG. 4, step 305 in FIG. 6, step 608 in FIG. 9, step 805 in FIG. 11, step 1009 in FIG. 13, step 1207 in FIG. 15, step 1406 in FIG. 17, step 305a in FIG. 20b, step 608a in FIG. 23b, step 805a in FIG. 25b, and/or another process of the technology described in this application.

The AUSF entity 270 may further include a storage unit 2706, configured to store program code and data that are of the AUSF entity 270.

The obtaining unit 2701, the generation unit 2702, and the processing unit 2704 may be integrated into one device. The device may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The receiving unit 2703 may be a communications interface, a transceiver, a transceiver circuit, or the like. The communications interface is a general term. During specific implementation, the communications interface may include a plurality of interfaces, for example, may include an interface between the AUSF entity 270 and a V-AMF entity, an interface between the AUSF entity 270 and an H-AMF, and an interface between the AUSF entity 270 and the another entity. The storage unit 2706 may be a memory.

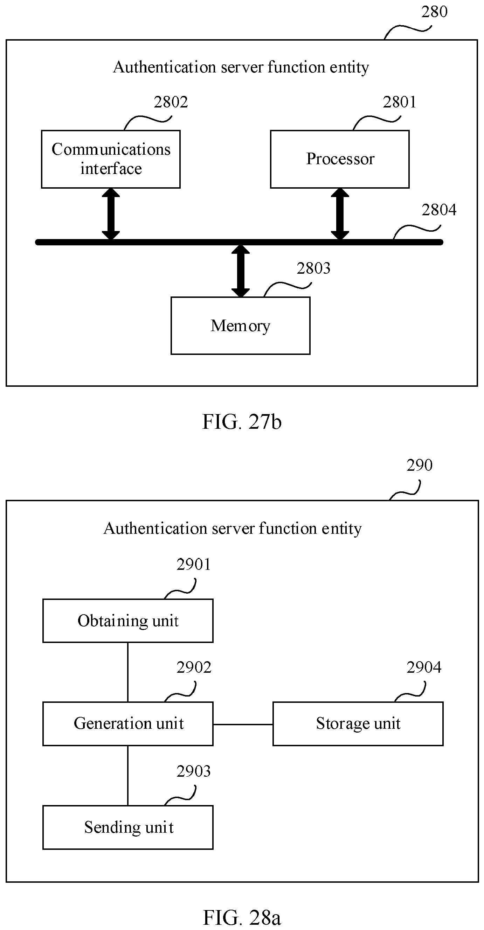

When a device into which the obtaining unit 2701, the generation unit 2702, and the processing unit 2704 may be integrated is a processor, the receiving unit 2703 is a communications interface, and the storage unit 2706 is a memory, the AUSF entity 270 provided in this embodiment of this application may be an AUSF entity 280 shown in FIG. 27b.

Referring to FIG. 27b, the AUSF entity 280 includes a processor 2801, a communications interface 2802, and a memory 2803. Optionally, the AUSF entity 280 may further include a bus 2804. The processor 2801, the communications interface 2802, and the memory 2803 may be connected to each other by using the bus 2804. The bus 2804 may be a peripheral component interconnect (peripheral component interconnect, PCI) bus, an extended industry standard architecture (extended industry standard architecture, EISA) bus, or the like. The bus 2804 may be classified into an address bus, a data bus, a control bus, and the like. For ease of representation, only one thick line is used to represent the bus in FIG. 27b, but this does not mean that there is only one bus or only one type of bus.

The AUSF entities shown in FIG. 27a and FIG. 27b may be the AUSF entities in the system architectures in FIG. 1, FIG. 2, and FIG. 3.

When an integrated module is used, FIG. 28a is a schematic block diagram of another AUSF entity 290 according to an embodiment of this application. The AUSF entity 290 includes an obtaining unit 2901, a generation unit 2902, and a sending unit 2903. The obtaining unit 2901 is configured to obtain a security algorithm. The generation unit 2702 is configured to generate a key. The key is used to protect transmission of a parameter between a terminal and an HPLMN. For example, the obtaining unit 2901 and the generation unit 2702 are configured to support the AUSF entity 290 in performing step 201 in FIG. 5, steps 401 and 402 in FIG. 7, steps 701 to 703 in FIG. 10, steps 901 and 902 in FIG. 12, steps 1103 to 1106 in FIG. 14, steps 1302 to 1304 in FIG. 16, steps 1501 to 1503 in FIG. 18, steps 401a and 402a in FIG. 21a, steps 701a to 703a in FIG. 24a, steps 901a and 902a in FIG. 26a, and/or another process of a technology described in this application. The sending unit 2903 is configured to send the security algorithm and the key to another entity in the HPLMN. The another entity is an entity that needs to send the parameter to the terminal. For example, the sending unit 2903 is configured to support the AUSF entity 290 in performing step 202 in FIG. 5, step 403 in FIG. 7, step 706 in FIG. 10, step 903 in FIG. 12, step 1107 in FIG. 14, step 1305 in FIG. 16, step 1504 in FIG. 18, step 403a in FIG. 21b, step 706a in FIG. 24b, step 903a in FIG. 26b, and/or another process of the technology described in this application.

The AUSF entity 290 may further include a storage unit 2904, configured to store program code and data that are of the AUSF entity 290.

The obtaining unit 2901 and the generation unit 2902 may be integrated into one device. The device may be a processor or a controller, for example, may be a CPU, a general-purpose processor, a DSP, an ASIC, an FPGA or another programmable logic device, a transistor logic device, a hardware component, or any combination thereof. The processor may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The sending unit 2903 may be a communications interface, a transceiver, a transceiver circuit, or the like. The communications interface is a general term. During specific implementation, the communications interface may include a plurality of interfaces, for example, may include an interface between the AUSF entity 290 and a V-AMF entity, an interface between the AUSF entity 290 and an H-AMF, and an interface between the AUSF entity 290 and the another entity. The storage unit 2904 may be a memory.

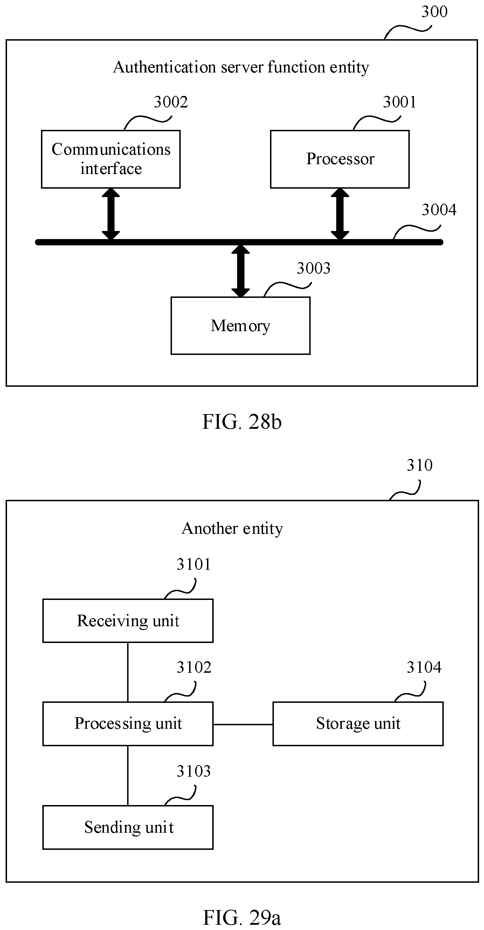

When a device into which the obtaining unit 2901 and the generation unit 2902 may be integrated is a processor, the sending unit 2903 is a communications interface, and the storage unit 2904 is a memory, the AUSF entity 290 provided in this embodiment of this application may be an AUSF entity 300 shown in FIG. 28b.

Referring to FIG. 28b, the AUSF entity 300 includes a processor 3001, a communications interface 3002, and a memory 3003. Optionally, the AUSF entity 300 may further include a bus 3004. The processor 3001, the communications interface 3002, and the memory 3003 may be connected to each other by using the bus 3004. The bus 3004 may be a PCI bus, an EISA bus, or the like. The bus 3004 may be classified into an address bus, a data bus, a control bus, and the like. For ease of representation, only one thick line is used to represent the bus in FIG. 28b, but this does not mean that there is only one bus or only one type of bus.

The AUSF entities shown in FIG. 28a and FIG. 28b may be the AUSF entities in the system architectures in FIG. 1, FIG. 2, and FIG. 3.

When an integrated module is used, FIG. 29a is a schematic block diagram of another entity 310 according to an embodiment of this application. The another entity 310 includes a receiving unit 3101 and a processing unit 3102. The receiving unit 3101 is configured to receive a security algorithm and a key from an AUSF entity in an HPLMN. The key is used to protect transmission of a parameter between a terminal and the HPLMN. For example, the receiving unit 3101 is configured to support the another entity 310 in performing step 202 in FIG. 5, step 403 in FIG. 7, step 706 in FIG. 10, step 903 in FIG. 12, step 1107 in FIG. 14, step 1305 in FIG. 16, step 1504 in FIG. 18, step 403a in FIG. 21b, step 706a in FIG. 24b, step 903a in FIG. 26b, and/or another process of the technology described in this application. The processing unit 3102 is configured to perform security protection processing on the parameter based on the security algorithm and the key. For example, the processing unit 3102 is configured to support the another entity 310 in performing step 203 in FIG. 5, step 404 in FIG. 7, step 707 in FIG. 10, step 904 in FIG. 12, step 1108 in FIG. 14, step 1306 in FIG. 16, step 1505 in FIG. 18, step 404a in FIG. 21b, step 707a in FIG. 24b, step 904a in FIG. 26b, and/or another process of the technology described in this application.

The another entity 310 may further include a sending unit 3103, configured to send, to the terminal, a parameter obtained by the security protection processing. For example, the sending unit 3103 is configured to support the another entity 310 in performing step 204 in FIG. 5, step 405 in FIG. 7, step 708 in FIG. 10, step 905 in FIG. 12, step 1109 in FIG. 14, step 1307 in FIG. 16, step 1506 in FIG. 18, step 405a in FIG. 21b, step 708a in FIG. 24b, step 905a in FIG. 26b, and/or another process of the technology described in this application.

The another entity 310 may further include a storage unit 3104, configured to store program code and data that are of the another entity 310. The processing unit 3102 may be a processor or a controller, for example, may be a CPU, a general-purpose processor, a DSP, an ASIC, an FPGA or another programmable logic device, a transistor logic device, a hardware component, or any combination thereof. The processor may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The receiving unit 3101 and the sending unit 3103 each may be a communications interface, a transceiver, a transceiver circuit, or the like. The communications interface is a general term. During specific implementation, the communications interface may include a plurality of interfaces, for example, may include an interface between the another entity 310 and a V-AMF entity, an interface between the another entity 310 and an H-AMF, and an interface between the another entity 310 and another entity. The storage unit 3104 may be a memory.

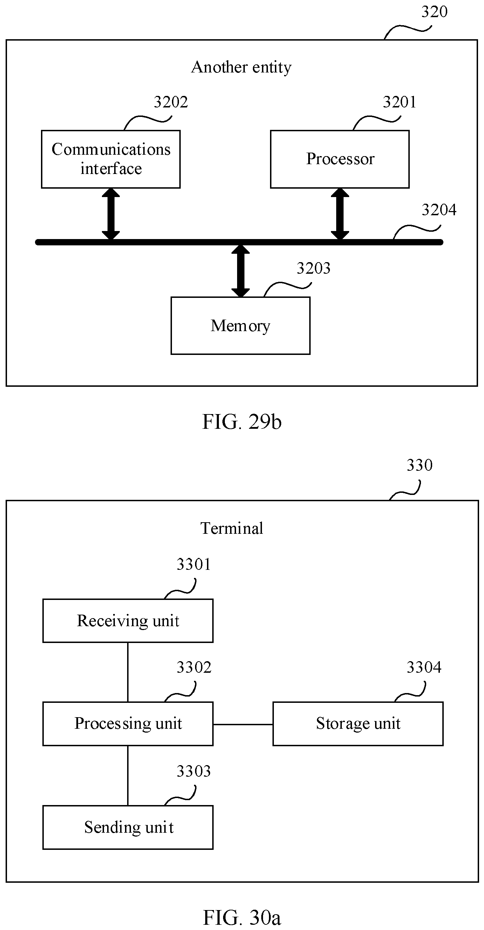

When the processing unit 3102 is a processor, the receiving unit 3101 and the sending unit 3103 each may be a communications interface, and the storage unit 3104 is a memory, the another entity 310 provided in this embodiment of this application may be another entity 320 shown in FIG. 29b. Referring to FIG. 29b, the another entity 320 includes a processor 3201, a communications interface 3202, and a memory 3203. The processor 3201, the communications interface 3202, and the memory 3203 may be connected to each other by using the bus 3204. The bus 3204 may be a PCI bus, an EISA bus, or the like. The bus 3204 may be classified into an address bus, a data bus, a control bus, and the like. For ease of representation, only one thick line is used to represent the bus in FIG. 29b, but this does not mean that there is only one bus or only one type of bus.

The other entities shown in FIG. 29a and FIG. 29b may be the UDM entities or the H-PCF entities in the system architectures in FIG. 1, FIG. 2, and FIG. 3.

When an integrated module is used, FIG. 30a is a schematic block diagram of a terminal 330 according to an embodiment of this application. The terminal 330 includes a receiving unit 3301 and a processing unit 3302. The receiving unit 3301 is configured to receive a parameter that is obtained after security protection processing and that is sent by another entity, or is configured to receive a parameter that is obtained after security protection processing and that is sent by an AUSF entity. For example, the receiving unit 3301 is configured to support the terminal 330 in performing step 104 in FIG. 4, step 305 in FIG. 6, step 608 in FIG. 9, step 805 in FIG. 11, step 1009 in FIG. 13, step 1207 in FIG. 15, step 1406 in FIG. 17, step 305a in FIG. 20b, step 608a in FIG. 23b, step 805a in FIG. 25b, and/or another process of the technology described in this application. Alternatively, the receiving unit 3301 is configured to support the terminal 330 in performing step 204 in FIG. 5, step 405 in FIG. 7, step 708 in FIG. 10, step 905 in FIG. 12, step 1109 in FIG. 14, step 1307 in FIG. 16, step 1506 in FIG. 18, step 405a in FIG. 21b, step 708a in FIG. 24b, step 905a in FIG. 26b, and/or another process of the technology described in this application.

The terminal 330 further includes a sending unit 3303, configured to perform another process of the technology described in this application; and a storage unit 3304, configured to store program code and data that are of the terminal 330.

The processing unit 3302 may be a processor or a controller, for example, may be a CPU, a general-purpose processor, a DSP, an ASIC, an FPGA or another programmable logic device, a transistor logic device, a hardware component, or any combination thereof. The processor may implement or execute various examples of logical blocks, modules, and circuits described with reference to content disclosed in this application. The processor may alternatively be a combination of processors implementing a computing function, for example, a combination of one or more microprocessors, or a combination of the DSP and a microprocessor. The receiving unit 3301 may be a receiver, the sending unit 3303 may be a transmitter, and the storage unit 3304 may be a memory.

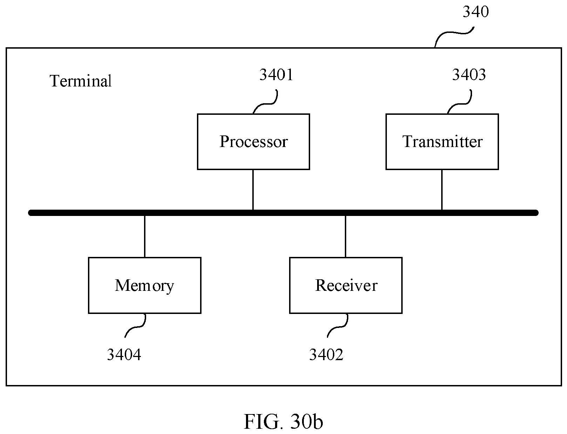

When the processing unit 3302 is a processor, the receiving unit 3301 is a receiver, the sending unit 3303 is a transmitter, and the storage unit 3304 is a memory, the terminal 330 provided in this embodiment of this application may be a terminal 340 shown in FIG. 30b.

Referring to FIG. 30b, the terminal 340 includes a processor 3401, a receiver 3402, a transmitter 3403, and a memory 3404. The receiver 3402 and the transmitter 3403 may be connected to an antenna. In a downlink direction, the receiver 3402 receives, by using the antenna, information sent by a network device, and the transmitter 3403 sends the information to the processor 3401 for processing. Alternatively, in an uplink direction, the processor 3401 processes information of the terminal, and transmits the information to the network device by using the transmitter 3403. Alternatively, some or all of the foregoing modules may be implemented in a form of an integrated circuit that is embedded in a chip of the terminal. In addition, the modules may be independently implemented, or may be integrated together. That is, the foregoing modules may be one or more integrated circuits, for example, one or more ASICs, one or more DSPs, or one or more FPGAs, configured to implement the foregoing methods.

The terminals shown in FIG. 30a and FIG. 30b may be the terminal device in the system architectures in FIG. 1, FIG. 2, and FIG. 3.

All or some of the foregoing embodiments may be implemented by means of software, hardware, firmware, or any combination thereof. When software is used to implement the embodiments, some or all of the embodiments may be implemented in a form of a computer program product. The computer program product includes one or more computer instructions. When the computer program instructions are loaded and executed on a computer, some or all of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

A person skilled in the art should be aware that in the foregoing one or more examples, functions described in the embodiments of this application may be implemented by hardware, software, firmware, or any combination thereof. When the embodiments of this application are implemented by software, the foregoing functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general-purpose or dedicated computer.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parameter protection method, comprising:
obtaining (101), by an authentication server function entity in a home public land mobile network, HPLMN, a security algorithm, and generating a key, wherein the key is used to protect transmission of a parameter between a terminal and the HPLMN;
receiving (102), by the authentication server function entity, a first parameter from another entity in the HPLMN, wherein the another entity is an entity that needs to send the first parameter to the terminal;
performing (103), by the authentication server function entity, security protection processing on the first parameter based on the security algorithm and the key to obtain a second parameter; and
sending (1041a), by the authentication server function entity, the second parameter to the another entity.

2. The method according to claim 1, wherein the obtaining, by an authentication server function entity in an HPLMN, a security algorithm comprises:
determining, by the authentication server function entity, a default security algorithm between the terminal and the HPLMN as the security algorithm.

3. The method according to claim 1 or 2, wherein the generating, by an authentication server function entity in an HPLMN, a key comprises:
receiving (1202), by the authentication server function entity, a second root key from an authentication credential repository and processing function entity in the HPLMN, wherein the second root key is generated by the authentication credential repository and processing function entity, and the second root key is different from a first root key generated by the authentication credential repository and processing function entity in a security authentication process between the terminal and an access and mobility management function entity in a visited public land mobile network, VPLMN; and
generating (1204), by the authentication server function entity, the key based on an input parameter, wherein the input parameter comprises the second root key.

4. The method according to claim 1 or 2, wherein the generating, by an authentication server function entity, a key comprises:
receiving (1401), by the authentication server function entity, a third root key from an authentication credential repository and processing function entity in the HPLMN, wherein the third root key is generated by the authentication credential repository and processing function entity in a security authentication process between the terminal and an access and mobility management function entity in the HPLMN; and
generating (1403), by the authentication server function entity, the key based on an input parameter, wherein the input parameter comprises the third root key.

5. The method according to any one of claims 1 to 4, wherein the second parameter is further sent by the another entity via an entity in a visited public land mobile network, VPLMN, to the terminal.

6. The method according to any one of claims 1 to 5, wherein the another entity is a unified data management entity in the HPLMN

7. A parameter protection method, comprising:
sending (102), by a unified data management entity in a home public land mobile network HPLMN, a first parameter to an authentication server function entity in the HPLMN;
receiving (1041a), by the unified data management entity from the authentication server function entity, a second parameter which is obtained by a security protection processing of the first paramerer; and
sending (1042a), by the unified data management entity by using an access and mobility management function entity in a visited public land mobile network, VPLMN, the second parameter to a terminal.

8. The method according to claim 7, whererin berfore the sending the first parameter to the authentication server function entity, the method further comprises:
generate, by the unified data management entity, a root key;
sending, by the unified data management entity, the root key to the authentication server function entity, wherein the root key is used to derive a key to protect transmission of a parameter between the terminal and the HPLMN

9. A parameter protection device comprising means for carrying out steps of the method according to any one of claims 1 to 6.

10. A parameter protection device comprising means for carrying out steps of the method according to any one of claims 7 to 8.

11. A parameter protection system, comprising an authentication server function entity in a home public land mobile network, HPLMN, and another entity in the HPLMN; wherein:
the authentication server function entity is configured to:
obtain a security algorithm, and generate a key, wherein the key is used to protect transmission of a parameter between a terminal and the HPLMN;
receive a first parameter from the another entity in the HPLMN, wherein the another entity is an entity that needs to send the first parameter to the terminal;
perform security protection processing on the first parameter based on the security algorithm and the key to obtain a second parameter; and
send the second parameter to the another entity; and
the another entity is configured to:
send the first parameter to the authentication server function entity;
receive the second parameter from the authentication server function entity; and
send, by using an access and mobility management function entity in a visited public land mobile network, VPLMN, the second parameter to the terminal.

12. The system according to claim 11, wherein the authentication server function entity, further configured to determine a default security algorithm between the terminal and the HPLMN as the security algorithm.

13. The system according to claim 11 or 12, wherein the authentication server function entity, further configured to:
receive a second root key from an authentication credential repository and processing function entity in the HPLMN, wherein the second root key is generated by the authentication credential repository and processing function entity, and the second root key is different from a first root key generated by the authentication credential repository and processing function entity in a security authentication process between the terminal and an access and mobility management function entity in the VPLMN; and generate the key based on an input parameter, wherein the input parameter comprises the second root key; or
receive a third root key from an authentication credential repository and processing function entity in the HPLMN, wherein the third root key is generated by the authentication credential repository and processing function entity in a security authentication process between the terminal and an access and mobility management function entity in the HPLMN; and generate the key based on an input parameter, wherein the input parameter comprises the third root key.

14. The system according to any one of claims 11 to 13, wherein the another entity is a unified data management entity.

15. A computer-readable storage medium comprising instructions which, when being executed, cause an apparatus to carry out the method of any one of claims 1 to 8.

## Patentansprüche

1. Parameterschutzverfahren, das Folgendes umfasst:
Erhalten (101), durch eine Authentifizierungsserverfunktionseinheit in einem Heimatnetz (home public land mobile network - HPLMN), eines Sicherheitsalgorithmus und Erzeugen eines Schlüssels, wobei der Schlüssel verwendet wird, um eine Übertragung eines Parameters zwischen einem Endgerät und dem HPLMN zu schützen;
Empfangen (102), durch die Authentifizierungsserverfunktionseinheit, eines ersten Parameters von einer anderen Einheit in dem HPLMN, wobei die andere Einheit eine Einheit ist, die den ersten Parameter an das Endgerät senden muss;
Durchführen (103), durch die Authentifizierungsserverfunktionseinheit, einer Sicherheitsschutzverarbeitung an dem ersten Parameter basierend auf dem Sicherheitsalgorithmus und dem Schlüssel, um einen zweiten Parameter zu erhalten; und
Senden (1041a), durch die Authentifizierungsserverfunktionseinheit, des zweiten Parameters an die andere Einheit.

2. Verfahren nach Anspruch 1, wobei das Erhalten, durch eine Authentifizierungsserverfunktionseinheit in einem HPLMN, eines Sicherheitsalgorithmus Folgendes umfasst:
Bestimmen, durch die Authentifizierungsserverfunktionseinheit, eines Standardsicherheitsalgorithmus zwischen dem Endgerät und dem HPLMN als den Sicherheitsalgorithmus.

3. Verfahren nach Anspruch 1 oder 2, wobei das Erzeugen, durch eine Authentifizierungsserverfunktionseinheit in einem HPLMN, eines Schlüssels Folgendes umfasst:
Empfangen (1202), durch die Authentifizierungsserverfunktionseinheit, eines zweiten Stammschlüssels von einer Authentifizierungsberechtigungsnachweis-Repository- und Verarbeitungsfunktionseinheit in dem HPLMN, wobei der zweite Stammschlüssel durch die Authentifizierungsberechtigungsnachweis-Repository- und Verarbeitungsfunktionseinheit erzeugt wird und sich der zweite Stammschlüssel von einem ersten Stammschlüssel unterscheidet, der durch die Authentifizierungsberechtigungsnachweis-Repository- und Verarbeitungsfunktionseinheit in einer Sicherheitsauthentifizierungsverarbeitung zwischen dem Endgerät und einer Zugriffs- und Mobilitätsverwaltungsfunktionseinheit in einem Aufenthaltsmobilfunknetz (visited public land mobile network - VPLMN) erzeugt wird; und
Erzeugen (1204), durch die Authentifizierungsserverfunktionseinheit, des Schlüssels basierend auf einem Eingabeparameter, wobei der Eingabeparameter den zweiten Stammschlüssel umfasst.

4. Verfahren nach Anspruch 1 oder 2, wobei das Erzeugen, durch eine Authentifizierungsserverfunktionseinheit, eines Schlüssels Folgendes umfasst:
Empfangen (1401), durch die Authentifizierungsserverfunktionseinheit, eines dritten Stammschlüssels von einer Authentifizierungsberechtigungsnachweis-Repository- und Verarbeitungsfunktionseinheit in dem HPLMN, wobei der dritte Stammschlüssel durch die Authentifizierungsberechtigungsnachweis-Repository- und Verarbeitungsfunktionseinheit in einer Sicherheitsauthentifizierungsverarbeitung zwischen dem Endgerät und einer Zugriffs- und Mobilitätsverwaltungsfunktionseinheit in dem HPLMN erzeugt wird; und
Erzeugen (1403), durch die Authentifizierungsserverfunktionseinheit, des Schlüssels basierend auf einem Eingabeparameter, wobei der Eingabeparameter den dritten Stammschlüssel umfasst.

5. Verfahren nach einem der Ansprüche 1 bis 4, wobei der zweite Parameter ferner durch die andere Einheit über eine Einheit in einem Aufenthaltsmobilfunknetz (VPLMN) an das Endgerät gesendet wird.

6. Verfahren nach einem der Ansprüche 1 bis 5, wobei die andere Einheit eine vereinheitlichte Datenverwaltungseinheit in dem HPLMN ist.

7. Parameterschutzverfahren, das Folgendes umfasst:
Senden (102), durch eine vereinheitlichte Datenverwaltungseinheit in einem Heimatnetz (HPLMN), eines ersten Parameters an eine Authentifizierungsserverfunktionseinheit in dem HPLMN;
Empfangen (1041a), durch die vereinheitlichte Datenverwaltungseinheit von der Authentifizierungsserverfunktionseinheit, eines zweiten Parameters, der durch eine Sicherheitsschutzverarbeitung des ersten Parameters erhalten wird; und
Senden (1042a), durch die vereinheitlichte Datenverwaltungseinheit durch Verwenden einer Zugriffs- und Mobilitätsverwaltungsfunktionseinheit in einem Aufenthaltsmobilfunknetz (VPLMN), des zweiten Parameters an ein Endgerät.

8. Verfahren nach Anspruch 7, wobei vor dem Senden des ersten Parameters an die Authentifizierungsserverfunktionseinheit das Verfahren ferner Folgendes umfasst:
Erzeugen, durch die vereinheitlichte Datenverwaltungseinheit, eines Stammschlüssels;
Senden, durch die vereinheitlichte Datenverwaltungseinheit, des Stammschlüssels an die Authentifizierungsserverfunktionseinheit, wobei der Stammschlüssel verwendet wird, um einen Schlüssel abzuleiten, um die Übertragung eines Parameters zwischen dem Endgerät und dem HPLMN zu schützen.

9. Parameterschutzvorrichtung, die Mittel zum Vornehmen von Schritten des Verfahrens nach einem der Ansprüche 1 bis 6 umfasst.

10. Parameterschutzvorrichtung, die Mittel zum Vornehmen von Schritten des Verfahrens nach einem der Ansprüche 7 bis 8 umfasst.

11. Parameterschutzsystem, das eine Authentifizierungsserverfunktionseinheit in einem Heimatnetz (HPLMN) und eine andere Einheit in dem HPLMN umfasst; wobei:
die Authentifizierungsserverfunktionseinheit für Folgendes konfiguriert ist:
Erhalten eines Sicherheitsalgorithmus und Erzeugen eines Schlüssels, wobei der Schlüssel verwendet wird, um die Übertragung eines Parameters zwischen einem Endgerät und dem HPLMN zu schützen;
Empfangen eines ersten Parameters von der anderen Einheit in dem HPLMN, wobei die andere Einheit eine Einheit ist, die den ersten Parameter an das Endgerät senden muss;
Durchführen der Sicherheitsschutzverarbeitung an dem ersten Parameter basierend auf dem Sicherheitsalgorithmus und dem Schlüssel, um einen zweiten Parameter zu erhalten; und
Senden des zweiten Parameters an die andere Einheit; und
die andere Einheit für Folgendes konfiguriert ist:
Senden des ersten Parameters an die Authentifizierungsserverfunktionseinheit;
Empfangen des zweiten Parameters von der Authentifizierungsserverfunktionseinheit; und
Senden, durch Verwenden einer Zugriffs- und Mobilitätsverwaltungsfunktionseinheit in einem Aufenthaltsmobilfunknetz (VPLMN), des zweiten Parameters an das Endgerät.

12. System nach Anspruch 11, wobei die Authentifizierungsserverfunktionseinheit ferner konfiguriert ist, um einen Standardsicherheitsalgorithmus zwischen dem Endgerät und dem HPLMN als den Sicherheitsalgorithmus zu bestimmen.

13. System nach Anspruch 11 oder 12, wobei die Authentifizierungsserverfunktionseinheit ferner für Folgendes konfiguriert ist:
Empfangen eines zweiten Stammschlüssels von einer Authentifizierungsberechtigungsnachweis-Repository- und Verarbeitungsfunktionseinheit in dem HPLMN, wobei der zweite Stammschlüssel durch die Authentifizierungsberechtigungsnachweis-Repository- und Verarbeitungsfunktionseinheit erzeugt wird und sich der zweite Stammschlüssel von einem ersten Stammschlüssel unterscheidet, der durch die Authentifizierungsberechtigungsnachweis-Repository- und Verarbeitungsfunktionseinheit in einer Sicherheitsauthentifizierungsverarbeitung zwischen dem Endgerät und einer Zugriffs- und Mobilitätsverwaltungsfunktionseinheit in dem VPLMN erzeugt wird; und Erzeugen des Schlüssels basierend auf einem Eingabeparameter, wobei der Eingabeparameter den zweiten Stammschlüssel umfasst; oder
Empfangen eines dritten Stammschlüssels von einer Authentifizierungsberechtigungsnachweis-Repository- und Verarbeitungsfunktionseinheit in dem HPLMN, wobei der dritte Stammschlüssel durch die Authentifizierungsberechtigungsnachweis-Repository- und Verarbeitungsfunktionseinheit in einer Sicherheitsauthentifizierungsverarbeitung zwischen dem Endgerät und einer Zugriffs- und Mobilitätsverwaltungsfunktionseinheit in dem HPLMN erzeugt wird; und Erzeugen des Schlüssel basierend auf einem Eingabeparameter, wobei der Eingabeparameter den dritten Stammschlüssel umfasst.

14. System nach einem der Ansprüche 11 bis 13, wobei die andere Einheit eine vereinheitlichte Datenverwaltungseinheit ist.

15. Computerlesbares Speichermedium, das Anweisungen umfasst, die, wenn sie ausgeführt werden, eine Einrichtung veranlassen, das Verfahren nach einem der Ansprüche 1 bis 8 vorzunehmen.

## Revendications

1. Procédé de protection de paramètre, comprenant :
l'obtention (101), par une entité de fonction de serveur d'authentification dans un réseau mobile terrestre public domestique, HPLMN, d'un algorithme de sécurité, et la génération d'une clé, la clé étant utilisée pour protéger la transmission d'un paramètre entre un terminal et le HPLMN ;
la réception (102), par l'entité de fonction de serveur d'authentification, d'un premier paramètre d'une autre entité dans le HPLMN, l'autre entité étant une entité qui doit envoyer le premier paramètre au terminal ;
le fait d'effectuer (103), par l'entité de fonction de serveur d'authentification, d'un traitement de protection de sécurité sur le premier paramètre en fonction de l'algorithme de sécurité et de la clé pour obtenir un second paramètre ; et
l'envoi (1041a), par l'entité de fonction de serveur d'authentification, du second paramètre à une autre entité.

2. Procédé selon la revendication 1, dans lequel l'obtention, par une entité de fonction de serveur d'authentification dans un HPLMN, d'un algorithme de sécurité comprend :
la détermination, par l'entité de fonction de serveur d'authentification, d'un algorithme de sécurité par défaut entre le terminal et le HPLMN en tant qu'algorithme de sécurité.

3. Procédé selon la revendication 1 ou 2, dans lequel la génération, par une entité de fonction de serveur d'authentification dans un HPLMN, d'une clé comprend :
la réception (1202), par l'entité de fonction de serveur d'authentification, d'une deuxième clé racine d'un référentiel d'informations d'identification d'authentification et une entité de fonction de traitement dans le HPLMN, la deuxième clé racine étant générée par le référentiel d'informations d'identification d'authentification et l'entité de fonction de traitement, et la deuxième clé racine est différente d'une première clé racine générée par le référentiel d'informations d'identification d'authentification et l'entité de fonction de traitement dans un processus d'authentification de sécurité entre le terminal et une entité de fonction de gestion d'accès et de mobilité dans un réseau mobile terrestre public visité, VPLMN ; et
la génération (1204), par l'entité de fonction de serveur d'authentification, de la clé en fonction d'un paramètre d'entrée, le paramètre d'entrée comprenant la deuxième clé racine.

4. Procédé selon la revendication 1 ou 2, dans lequel la génération, par une entité de fonction de serveur d'authentification, d'une clé comprend :
la réception (1401), par l'entité de fonction de serveur d'authentification, d'une troisième clé racine d'un référentiel d'informations d'identification d'authentification et entité de fonction de traitement dans le HPLMN, la troisième clé racine étant générée par le référentiel d'informations d'identification d'authentification et entité de fonction de traitement dans un processus d'authentification de sécurité entre le terminal et une entité de fonction d'accès et de gestion de mobilité dans le HPLMN ; et
la génération (1403), par l'entité de fonction de serveur d'authentification, de la clé en fonction d'un paramètre d'entrée, le paramètre d'entrée comprenant la troisième clé racine.

5. Procédé selon l'une quelconque des revendications 1 à 4, dans lequel le second paramètre est en outre envoyé par l'autre entité par l'intermédiaire d'une entité dans un réseau mobile terrestre public visité, VPLMN, au terminal.

6. Procédé selon l'une quelconque des revendications 1 à 5, dans lequel l'autre entité est une entité de gestion de données unifiée dans le HPLMN.

7. Procédé de protection de paramètre, comprenant :
l'envoi (102), par une entité de gestion de données unifiée dans un réseau mobile terrestre public domestique HPLMN, d'un premier paramètre à une entité de fonction de serveur d'authentification dans le HPLMN ;
la réception (1041a), par l'entité de gestion de données unifiée de l'entité de fonction de serveur d'authentification, d'un second paramètre qui est obtenu par un traitement de protection de sécurité du premier paramètre ; et
l'envoi (1042a), par l'entité de gestion de données unifiée en utilisant une entité de fonction de gestion d'accès et de mobilité dans un réseau mobile terrestre public visité, VPLMN, du second paramètre à un terminal.

8. Procédé selon la revendication 7, dans lequel avant l'envoi du premier paramètre à l'entité de fonction de serveur d'authentification, le procédé comprend en outre :
la génération, par l'entité de gestion de données unifiée, d'une clé racine ;
l'envoi, par l'entité de gestion de données unifiée, de la clé racine à l'entité de fonction de serveur d'authentification, la clé racine étant utilisée pour dériver une clé pour protéger la transmission d'un paramètre entre le terminal et le HPLMN.

9. Dispositif de protection de paramètre comprenant des moyens pour mettre en oeuvre les étapes du procédé selon l'une quelconque des revendications 1 à 6.

10. Dispositif de protection de paramètre comprenant des moyens pour mettre en œuvre les étapes du procédé selon l'une quelconque des revendications 7 à 8.

11. Système de protection de paramètre, comprenant une entité de fonction de serveur d'authentification dans un réseau mobile terrestre public domestique, HPLMN, et une autre entité dans le HPLMN ; dans lequel :
l'entité de fonction de serveur d'authentification est configurée pour :
obtenir un algorithme de sécurité et générer une clé, la clé étant utilisée pour protéger la transmission d'un paramètre entre un terminal et le HPLMN ;
recevoir un premier paramètre de l'autre entité dans le HPLMN, l'autre entité étant une entité qui doit envoyer le premier paramètre au terminal ;
effectuer un traitement de protection de sécurité sur le premier paramètre en fonction de l'algorithme de sécurité et de la clé pour obtenir un second paramètre ; et
envoyer le second paramètre à une autre entité ; et
l'autre entité est configurée pour :
envoyer le premier paramètre à l'entité de fonction de serveur d'authentification ;
recevoir le second paramètre de l'entité de fonction de serveur d'authentification ; et
envoyer, en utilisant une entité de fonction d'accès et de gestion de mobilité dans un réseau mobile terrestre public visité, VPLMN, le second paramètre au terminal.

12. Système selon la revendication 11, dans lequel l'entité de fonction de serveur d'authentification est configurée en outre pour déterminer un algorithme de sécurité par défaut entre le terminal et le HPLMN en tant qu'algorithme de sécurité.

13. Système selon la revendication 11 ou 12, dans lequel l'entité de fonction de serveur d'authentification est en outre configurée pour :
recevoir une deuxième clé racine d'un référentiel d'informations d'identification d'authentification et une entité de fonction de traitement dans le HPLMN, la deuxième clé racine étant générée par le référentiel d'informations d'identification d'authentification et l'entité de fonction de traitement, et la deuxième clé racine étant différente d'une première clé racine générée par le référentiel d'informations d'identification d'authentification et une entité de fonction de traitement dans un processus d'authentification de sécurité entre le terminal et une entité de fonction de gestion d'accès et de mobilité dans le VPLMN ; et générer la clé en fonction d'un paramètre d'entrée, le paramètre d'entrée comprenant la deuxième clé racine ; ou
recevoir une troisième clé racine d'un référentiel d'informations d'identification d'authentification et une entité de fonction de traitement dans le HPLMN, la troisième clé racine étant générée par le référentiel d'informations d'identification d'authentification et l'entité de fonction de traitement dans un processus d'authentification de sécurité entre le terminal et une entité de fonction de gestion d'accès et de mobilité dans le HPLMN ; et générer la clé en fonction d'un paramètre d'entrée, le paramètre d'entrée comprenant la troisième clé racine.

14. Système selon l'une quelconque des revendications 11 à 13, dans lequel l'autre entité est une entité de gestion de données unifiée.

15. Support lisible par ordinateur comprenant des instructions qui, lorsqu'elles sont exécutées, amènent un appareil à mettre en œuvre le procédé selon l'une quelconque des revendications 1 à 8.
